# EUROPÄISCHE PATENTSCHRIFT

(11) **EP 3 833 826 B1**
(45) Veröffentlichungstag und Bekanntmachung des Hinweises auf die Patenterteilung: **18.01.2023**
(21) Anmeldenummer: 19745095.0
(22) Anmeldetag: 23.07.2019
(51) Int. Cl.: E04B 1/62, E04B 1/66, E04D 12/00, E04D 13/00, G01M 3/16, G01M 3/24, G01M 5/00, G06Q 40/08, G08B 21/20, B32B 5/02, G01N 27/12, G01N 27/22, E04D 5/10, B32B 27/12, B32B 3/08, B32B 5/26, B32B 7/12, B32B 27/08, B32B 27/20, B32B 27/32

(54) **BAUFOLIE**
CONSTRUCTION FILM
FEUILLE DE CONSTRUCTION

(30) Priorität: 03.09.2018 DE 102018006951
(43) Veröffentlichungstag der Anmeldung: 16.06.2021
(73) Patentinhaber: EWALD DÖRKEN AG, 58313 Herdecke (DE)
(72) Erfinder: HILLERINGMANN, Ulrich, 33181 Bad Wünneberg (DE); PETROV, Dmitry, 33100 Paderborn (DE); MOKANIS, Ilias, 58313 Herdecke (DE); SAND, Henning, 44287 Dortmund (DE); BACHON, Thomas, 40597 Düsseldorf NRW (DE)
(74) Vertreter: Weidener, Jörg Michael
(86) Internationale Anmeldenummer: PCT/EP2019/069782
(87) Internationale Veröffentlichungsnummer: WO 2020/048673

(56) Entgegenhaltungen:
- EP-A1- 2 275 805
- DE-A1- 10 036 362
- DE-A1- 19 959 804
- US-A1- 2012 119 915
- US-A1- 2015 148 762
- US-A1- 2015 259 923

## Beschreibung

Die Erfindung betrifft eine Baufolie, insbesondere Dachbahn, Dachfolie, Flachdachbahn, Fassadenbahn und/oder Dampfbremse und/oder Unterdachbahn, insbesondere Unterdeck- und/oder Unterspannbahn, mit einem ein- oder mehrlagigen Schichtaufbau.

Die Baufolie kann im verlegten Zustand als Teil einer Gebäudehülle und/oder in der Bauwirtschaft und/oder der Bautechnik verwendet werden. Zudem kann die Baufolie unterhalb, der Witterungsseite abgewandt, von einer Begrünung und/oder Pflanzsubstrat und/oder Schüttungen, insbesondere Kiesschüttungen, und/oder als Dampfbremse, insbesondere dem Innenraum eines Gebäudes zugewandt, und/oder als Fassadenbekleidung eingesetzt werden.

Hauptaufgabe von Baufolien der vorgenannten Art ist es zumeist, eine Wasser- und Winddichtigkeit unter einer Hartbedachung und/oder unter einer Fassadenverkleidung sicherzustellen. Hierzu bedarf es einer wasser- und winddichten Baufolie und/oder Unterbedachung, die aus einer Mehrzahl von Streifen der Baufolie und/oder Unterbedachung hergestellt wird. Zur Herstellung wird die Baufolie als Bahnenware in Streifen auf dem Dach und/oder entlang einer Fassade, insbesondere in Art als Bestandteil einer Gebäudehülle, befestigt. Die einzelnen Reihen der Baufolienstreifen werden miteinander, insbesondere über eine Klebeverbindung, verbunden oder miteinander verschweißt. Durch die Verbindung der einzelnen Baufolienstreifen wird versucht, die notwendige Dichtigkeit zu gewährleisten.

Aufgrund von Verlegefehlern, aber auch bei Beschädigungen der Unterbedachung kann es zu Undichtigkeiten kommen. Problematisch ist in diesem Zusammenhang, dass die Gebäudehülle und/oder Fassadenverkleidung und/oder Unterbedachung bzw. die einzelnen miteinander verbundenen Baufolienstreifen im verlegten Zustand nicht ohne Weiteres sichtbar sind, da sie sich in der Regel zwischen der äußeren Verkleidung und einer weiteren Schicht, insbesondere eine Dämmplatte und/oder Kiesschüttungsschicht und/oder Innenverkleidungsplatten, insbesondere Decken-, Wand- und/oder Bodenverkleidung, befinden.

Dringt Feuchtigkeit über die Gebäudehülle und/oder Baufolie, insbesondere bei einem Leck, ein, ist der Zeitraum, bis der Schaden erkannt wird, üblicherweise sehr lang. Eine vorhandene erhöhte Feuchtigkeit kann demzufolge unbemerkt Schäden verursachen, die zumeist dann bemerkt werden, wenn das Schadensbild, insbesondere im Inneren des Gebäudes, sichtbar wird. Ein aufgrund von erhöhter Feuchtigkeit hervorgerufener Schaden kann beispielsweise ein Wasserfleck an einer Wand im Innenraum eines Gebäudes sein. Ein derartiger Wasserfleck gibt dann Anlass zur Reparatur, wobei häufig weit mehr Bereiche geschädigt sind als nur die den Wasserfleck aufweisende Wand. Zur Schadensbehebung muss aufwendig die Gebäudehülle zumindest bereichsweise freigelegt werden, um das Leck zu finden. Dies ist üblicherweise mit sehr hohem Aufwand und damit einhergehend auch mit sehr hohen Kosten verbunden.

Grundsätzlich ist es bekannt, Überwachungssysteme mit passiven Feuchtesensoren für die Bedachung vorzusehen. Diese Feuchtesensoren sind in der Regel in eine Dämmplatte eingefasst. Als passiver Sensor wird ein derartiger Sensor verstanden, dem elektrische Energie zur Detektion einer physikalischen Größe von außen zugeführt werden muss. Hierzu ist der passive Feuchtesensor mit einer Energieversorgungseinrichtung verbunden. Wird eine Vielzahl von Feuchtesensoren in der Bedachung eingesetzt, so können diese untereinander verkabelt sein.

Eine derartige Überwachung der Gebäudehülle ist sehr kostenintensiv, sowohl im Hinblick auf die Kosten bei der Installation des Überwachungssystems als auch aufgrund der laufenden Betriebskosten, insbesondere der Energiekosten. Die laufenden Betriebskosten setzen sich zum einen aus der benötigten dauerhaften Energieversorgung und zum anderen aus der Wartung zusammen. Darüber hinaus kann keine hinreichend genaue Lokalisation des Lecks in der Baufolie und/oder Gebäudehülle über das bekannte Überwachungssystem erfolgen. Somit muss auch bei der Detektion einer erhöhten Feuchtigkeit in der Bedachung ein aufwendiges Suchen des Lecks erfolgen.

Unter der Betrachtung des Kosten-Nutzen-Verhältnisses wird in der Praxis meist von einer Überwachung der Feuchtigkeit in der Gebäudehülle abgesehen. Letztlich wird ein zu spätes Erkennen eines Wasserschadens in Anbetracht der Kosten für eine stetige Überwachung der Feuchtigkeit in Kauf genommen.

DE 100 36 362 A1 offenbart eine Baufolie mit den Merkmalen des Oberbegriffs des Anspruchs 1.

Aufgabe der vorliegenden Erfindung ist es nun, die vorgenannten Nachteile im Stand der Technik zu vermeiden oder aber zumindest im Wesentlichen zu reduzieren.

Die vorgenannte Aufgabe wird erfindungsgemäß bei einer Baufolie mit den Merkmalen des Anspruchs 1 gelöst.

Letztlich versteht es sich, dass sofern der Feuchtesensor eine im unmittelbaren Kontakt mit der Vliesschicht stehende Elektrode aufweist, eine Gegenelektrode vorgesehen sein kann. Die Gegenelektrode kann, aber muss nicht im unmittelbaren Kontakt mit der Vliesschicht stehen. Die Gegenelektrode kann auch in einem anderen Bereich der Gebäudehülle und/oder räumlich entfernt zu der Elektrode angeordnet sein, insbesondere wobei die Gegenelektrode durch die Umgebung gebildet wird.

Vorzugsweise ist vorgesehen, dass der Feuchtesensor wenigstens zwei Elektroden aufweist, die im unmittelbaren Kontakt mit einer Vliesschicht sind.

Durch die unmittelbare Zuordnung des Feuchtesensors zur Baufolie ist es zunächst einmal in einfacher Weise möglich, die Leckstelle in der Gebäudehülle festzustellen. Von daher muss nur ein geringer Teil der Gebäudehülle entfernt werden, um zur Leckstelle zu gelangen.

Darüber hinaus gewährleistet ein aktiver Aufnehmer die elektrische Energieversorgung für sich selbst. Aktive Aufnehmer erzeugen aufgrund des Messprinzips ein elektrisches Signal, beispielsweise ein elektrodynamisches oder piezoelektrisches Signal. Erfindungsgemäß kann auch ein elektrochemisches erzeugtes Signal vorgesehen sein. Vorzugsweise wird somit keine elektrische Hilfsenergie und/oder keine durch ein äußeres Signal übertragene Energie benötigt.

Durch die erfindungsgemäße Verwendung eines aktiven Aufnehmers kann auch ein aufwendiges Verkabeln der Sensoren untereinander und/oder zu einer externen Energieversorgung entfallen. Die Sensoren benötigen als aktive Aufnehmer darüber hinaus auch keine stetige Zuführung von elektrischer Energie, da sie - im Falle der Detektion von Feuchtigkeit - die zum Aussenden eines Signals benötigte Energie selbst bereitstellen können.

Als Vliesschicht bzw. eine als Vlies ausgebildete Schicht ist insbesondere ein Gebilde aus Fasern begrenzter Länge, Endlosfasern (Filamenten) und/oder geschnittenen Garnen jeglicher Art und jeglichen Ursprungs, die zu einem Vlies zusammengefügt und miteinander verbunden worden sind. Als Vliesstoff wird meist ein größtenteils flexibles textiles Flächengebilde verstanden, das leicht biegsam ist.

Eine Anordnung der Elektrode des Feuchtesensors, vorzugsweise von zwei Elektroden, im unmittelbaren Kontakt zu der Vliesschicht ermöglicht eine frühzeitige und zielgerichtete Identifikation und/oder Lokalisation desjenigen Bereiches, der eine erhöhte Feuchtigkeit aufweist. Eine Anordnung in der Vliesschicht bietet sich nicht zuletzt deswegen an, da die Feuchtigkeit, insbesondere eine Flüssigkeit, sich in der Vliesschicht ausbreiten und somit die Elektrodenoberfläche mit Feuchtigkeit bzw. einem Feuchtigkeitsfilm benetzen kann. So kann auch ein Leck, das räumlich entfernt zu dem Feuchtesensor angeordnet ist, über den Feuchtesensor detektiert werden, da sich die Feuchtigkeit in der Vliesschicht ausbreiten bzw. verteilen kann. Des Weiteren ist vorteilhafterweise die Vliesschicht außenseitig an der Baufolie vorgesehen, so dass insbesondere ein Anbringen des Feuchtesensors außenseitig auf der Baufolie nach Herstellung des Schichtaufbaus der Baufolie erfolgen kann.

Die Elektrode ist derart ausgebildet, dass sie Feuchtigkeit detektieren kann, insbesondere durch eine Veränderung des elektrischen Leitverhaltens und/oder des Widerstands. Es versteht sich, dass der erfindungsgemäße Feuchtesensor auch zwei Elektroden aufweisen kann. Vorzugsweise sind elektrochemische Elektroden vorgesehen und/oder die Elektroden sind als elektrochemische Batterie und/oder Metallelektrode ausgebildet, insbesondere wobei die Feuchtigkeit bei Kontakt mit der Elektrode bzw. der Oberfläche der Elektrode als Elektrolytlösung wirksam ist.

Als Elektrolytlösung kann ein flüssiges Material verstanden werden, das bewegliche Ionen und/oder Ladungsträger enthält. Die als Elektrolytlösung wirkende Feuchtigkeit kann bei Kontaktierung der Elektrode und/oder der Elektroden zum Entstehen einer elektrischen Spannung beitragen.

Bei einer besonders bevorzugten Ausführungsform ist vorgesehen, dass die Elektrode und/oder die Elektroden an und/oder in der Vliesschicht angeordnet ist. Eine derartige Anordnung der Elektrode und/oder der Elektroden ermöglicht einen unmittelbaren Kontakt mit der Vliesschicht. Sofern die Elektrode und/oder die Elektroden in der Vliesschicht angeordnet ist, kann vorgesehen sein, dass bereits bei der Herstellung der Baufolie eine Integration des Feuchtesensors und/oder des Feuchtemessfühlers und/oder der Elektrode und/oder der Elektroden des Feuchtesensors erfolgt. Insbesondere kann vor Verbinden der Vliesschicht mit den weiteren Lagen der Baufolie bereits die Elektrode oder die Elektroden des Feuchtesensors bzw. der Feuchtesensoren in die Vliesschicht eingebracht bzw. eingebettet worden sein.

Vorzugsweise weist der Schichtaufbau und/oder die Baufolie wenigstens eine Funktionsschicht und wenigstens eine Trägerschicht auf. Die Funktionsschicht kann derart ausgebildet sein, dass die wesentlichen Funktionen der Baufolie, insbesondere die Wasserdichtigkeit, gewährleistet werden können. Die Trägerschicht kann zur Anordnung der Funktionsschicht und/oder weiterer Schichten vorgesehen sein. Zudem kann die Trägerschicht die Funktionsschicht und/oder die weiteren Schichten vor mechanischer Beanspruchung und/oder vor Sonneneinstrahlung schützen. Letztlich versteht es sich, dass in dem Schichtaufbau auch mehrere Funktionsschichten und/oder mehrere Trägerschichten vorgesehen sein können. Bei einer weiteren bevorzugten Ausführungsform des Erfindungsgedankens ist vorgesehen, dass die Funktionsschicht diffusionsoffen, insbesondere wasserdampfdurchlässig, und/oder wasserdicht und/oder atmungsaktiv ausgebildet ist. Besonders bevorzugt ist die Funktionsschicht diffusionsoffen, wasserdicht sowie atmungsaktiv.

Eine diffusionsoffene Funktionsschicht kann durch Ausbildung als mikroporöse Membran erreicht werden. Bei einer mikroporösen Membran bleibt der Schutz vor Wasser und/oder Feuchtigkeit bestehen, weil Wassertropfen zu groß sind und aufgrund ihrer Oberflächenspannung nicht durch die Mikroporen - die zum Diffusionstransport vorgesehen sind - gelangen. Eine mikroporöse Membran kann aus einer diffusionsdichten Polypropylen-Folie und/oder Kunststofffolie hergestellt werden. Bei der Produktion bzw. der Herstellung der Folie kann zur Porenbildung ein Füllstoff, insbesondere Calciumkarbonat, zugegeben werden, wobei die Folie anschließend gestreckt bzw. gestretcht wird. Allerdings lässt sich die Mikroporösität der Membran auch durch andere Verfahren erzielen.

Besonders bevorzugt ist die, insbesondere als Dachfolie und/oder Unterdachbahn ausgebildete, Baufolie bzw. der mehrlagige Schichtaufbau wasserdicht, diffusionsoffen und/oder atmungsaktiv ausgebildet. Darüber hinaus kann die Baufolie auch winddicht ausgebildet sein, wobei die verlegten, miteinander verbundenen Reihen der Baufolie eine Unterbedachung bilden.

Alternativ oder zusätzlich kann vorgesehen sein, dass die, vorzugsweise als Flachdachbahn ausgebildete, Baufolie wassersperrend und/oder wasserdicht, diffusionsdicht, wasserdampfundurchlässig, dampfbremsend und/oder dampfsperrend ausgebildet ist. Insbesondere ist die Baufolie derart ausgebildet, dass oberhalb der Baufolie, der Witterungsseite zugewandt, eine Drainage bzw. eine Wasserableitfunktion gewährleistet ist, so dass sich anstauendes Wasser auf dem Flachdach vermieden werden kann.

Vorzugsweise weist die, insbesondere als Flachdachbahn ausgebildete, Baufolie einen S_{d}-Wert von größer gleich 2 m, bevorzugt von größer als 50 m, weiter bevorzugt von 50 bis 2500 m, auf, wobei der vorgenannte S_{d}-Wert zumindest im nichtüberlappten Bereich von Baufolienstreifen verwirklicht ist. Der S_{d}-Wert beschreibt die wasserdampfdiffusionsäquivalente Luftschichtdicke und ist ein Maß für den Widerstand, den eine Bauteilschicht dem Durchgang von Wasserdampf entgegensetzt. Bei einem S_{d}-Wert von größer oder gleich 0,5 m ist nach DIN 4108-3 (Stand Juli 2018) eine diffusionshemmende und/oder dampfbremsende Schicht gewährleistet, insbesondere wobei ab einem S_{d}-Wert von größer oder gleich 1500 m eine diffusionsdichte und/oder dampfsperrende Schicht gewährleistet ist.

Des Weiteren kann die als Fassadenbahn ausgebildete Baufolie windbremsend, wasserdicht, UV-beständig und/oder diffusionsoffen ausgebildet sein, insbesondere wobei die Baufolie zudem auch als Dämmschutzbahn ausgebildet sein kann.

Vorzugsweise ist die als Flachdachbahn ausgebildete Baufolie als, insbesondere selbstklebende, Bitumenbahn und/oder Dachabdichtungsbahn ausgebildet.

Ferner kann die Baufolie als Dampfbremse und/oder Dampfsperre ausgebildet sein, insbesondere wobei die Baufolie diffusionsdicht, diffusionshemmend, wasserdampfbremsend, wasserdampfsperrend und/oder luftdicht, vorzugsweise wasserdicht, ausgebildet ist.

Insbesondere weist die Funktionsschicht und/oder die, insbesondere als Unterdachbahn ausgebildete, Baufolie einen S_{d}-Wert von kleiner gleich 0,5 m, bevorzugt von 0,01 bis 0,5 m, weiter bevorzugt von 0,01 bis 0,1 m, auf, wobei der vorgenannte S_{d}-Wert zumindest im nichtüberlappten Bereich von Baufolienstreifen verwirklicht ist. Bei einem S_{d}-Wert von kleiner oder gleich 0,5 m ist nach DIN 4108-3 (Stand Juli 2018) eine diffusionsoffene Schicht gewährleistet.

Darüber hinaus ist bei einer weiteren bevorzugten Ausführungsform die Vliesschicht als thermisch verfestigte und/oder nadel- und/oder nassstrahlverfestigte Vliesschicht ausgebildet. Zur Verfestigung der Vliesschicht kann insbesondere eine Bestrahlung mit Wasserstrahlen oder ein Vernadeln vorgesehen sein, insbesondere wobei eine Mehrzahl von den Wasserstrahlen zur Verfügung stellende und voneinander beabstandete Verteiler vorgesehen sein kann. Sowohl die Vernadelung als auch die Wasserstrahlverfestigung zählen zu mechanischen Verfestigungsmethoden bei der Vliesstoffherstellung.

Alternativ oder zusätzlich kann als Vliesschicht ein polyolefinisches Vlies, ein Polyestervlies, ein Naturfaservlies, ein Polypropylen-Spinnvlies, ein Polyamid-Vlies, ein Polylactide-Vlies (PLA-Vlies) und/oder ein Stapelfaservlies und/oder ein engmaschiges Gewirke vorgesehen sein.

Ganz besonders bevorzugt ist die Trägerschicht als Vliesschicht ausgebildet. Letztlich versteht es sich, dass auch die Trägerschicht wenigstens eine der vorgenannten Ausbildungsformen der Vliesschicht aufweisen kann.

Vorzugsweise ist der, insbesondere wenigstens eine Elektrode und/oder zwei Elektroden aufweisende, Feuchtesensor im unmittelbaren Kontakt mit der Trägerschicht. Bevorzugt kann der Feuchtesensor an und/oder in der Trägerschicht angeordnet sein. Vorteilhaft ist hierbei, dass sich die Feuchtigkeit über die Trägerschicht ausbreiten kann, da die, vorzugsweise als Vliesschicht ausgebildete, Trägerschicht Feuchtigkeit, insbesondere Wasser, speichern und/oder verteilen kann. So kann auch eine räumlich zu dem Feuchtesensor entfernte Eindringungsstelle von Feuchtigkeit in der Unterbedachung sicher festgestellt und/oder nachfolgend behoben werden.

Generell kann der Feuchtesensor - im Einbauzustand der Baufolie - entweder oberseitig, der Witterungsseite zugewandt, oder unterseitig, der Witterungsseite abgewandt, an der Baufolie angeordnet sein. Die oberseitige oder unterseitige Anordnung des Feuchtesensors ist insbesondere abhängig von der Art der Verwendung der erfindungsgemäßen Baufolie, wie nachfolgend noch im Detail erläutert wird.

Vorzugsweise ist die den Feuchtesensor aufweisende Trägerschicht und/oder die den Feuchtesensor und/oder die Elektrode aufweisende Vliesschicht unterseitig, der Witterungsseite abgewandt, der Baufolie angeordnet. Allerdings ist es auch möglich, die den Feuchtesensor aufweisende Trägerschicht und/oder die Elektrode aufweisende Vliesschicht oberseitig, der Witterungsseite zugewandt, der Baufolie anzuordnen.

Alternativ oder zusätzlich kann vorgesehen sein, dass oberseitig, der Witterungsseite zugewandt, auf der den Feuchtesensor aufweisenden Trägerschicht und/oder der den Feuchtesensor und/oder die Elektrode aufweisenden Vliesschicht wenigstens eine weitere Schicht des Schichtaufbaus angeordnet ist. Insbesondere ist die den Feuchtesensor und/oder die Elektrode aufweisende Trägerschicht und/oder Vliesschicht nicht unmittelbar der Witterungsseite zugewandt.

Als Witterungsseite wird diejenige Oberseite der Baufolie verstanden, die den äußeren Witterungseinflüssen zumindest mittelbar zugewandt ist. Vorteilhaft ist hierbei, dass die Funktionsschicht meist durch eine Trägerschicht und/oder Vliesschicht geschützt wird, die der Witterungsseite zugewandt ist, so dass die Funktionsschicht vor mechanischen Beanspruchungen geschützt wird.

Alternativ oder zusätzlich kann der Feuchtesensor und/oder die Elektrode und/oder die Elektroden die, insbesondere als Dampfbremse ausgebildete, Baufolie auch an der der Witterungsseite und/oder einer Dämmung zugewandten Vliesschicht - d.h. auf der Außenseite der Baufolie an der außenseitigen Vliesschicht - angeordnet sein.

In der Regel ist es jedoch in der Praxis so, dass die Trägerschicht und/oder die Vliesschicht nicht wasserdicht ausgebildet sind. Wird demgemäß der Feuchtesensor somit an der unmittelbar der Witterungsseite zugewandten Vliesschicht und/oder Trägerschicht angeordnet, so erfolgt insbesondere eine Detektion von Feuchtigkeit auch dann, wenn die Feuchtigkeit nicht über die Funktionsschicht und/oder die weiteren Schichten des mehrlagigen Schichtaufbaus durchdringt. Vorteilhaft ist in diesem Zusammenhang, dass der Feuchtesensor und/oder die Elektrode in denjenigen Bereich des Schichtaufbaus angeordnet ist, der dem Inneren des Gebäudes und/oder der Dämmung zugewandt ist.

Ein anderes Verhalten kann sich bei einer als Dampfbremse ausgebildeten Baufolie ergeben. In diesem Zusammenhang kann vorteilhafterweise der Feuchtesensor und/oder die Elektrode und/oder die Elektroden auf der dem Inneren des Gebäudes abgewandten Außenseite der Baufolie, insbesondere an und/oder in der Vliesschicht, angeordnet sein.

Folglich wird bevorzugt der Feuchtesensor in denjenigen Lagen der Baufolie angeordnet, die im verlegten Zustand bereits, vorzugsweise durch die Funktionsschicht, vor an der Witterungsseite vorhandener Feuchtigkeit, insbesondere Wasser bzw. Regen, geschützt werden.

Es ist vorgesehen, dass die Vliesschicht und/oder die, vorzugsweise als Vliesschicht ausgebildete, Trägerschicht einen in Wasser löslichen und/oder ein mit Wasser mischbaren Elektrolytbildner aufweist.

Als Elektrolytbildner wird eine chemische Verbindung verstanden, die im flüssigen oder gelösten Zustand in Ionen dissoziiert ist, die sich unter dem Einfluss eines elektrischen Feldes gerichtet bewegen.

Dabei kann als Elektrolytbildner insbesondere Zitronensäurepulver und/oder ein Oxalessigsäure, Mulonsäure, Glutarsäure, Chinasäure und/oder ein Vitamin C aufweisendes Pulver vorgesehen sein. Letztlich ist der Elektrolytbildner derart in die Vliesschicht und/oder die Trägerschicht eingebracht, dass bei Kontakt mit Feuchtigkeit der Elektrolytbildner sich in der Feuchtigkeit löst und sich somit bevorzugt die elektrische Leitfähigkeit und/oder die Anzahl der freien Ladungsträger in der als Elektrolytlösung ausgebildeten Feuchtigkeit erhöht. Vorteilhaft ist hierbei, dass, sofern der Feuchtesensor aufgrund eines elektrochemischen Messprinzips die Feuchtigkeit detektiert, die aufgrund des Messprinzips erzeugte elektrische Energie und/oder elektrische Spannung erhöht werden kann. Insbesondere können so auch sehr geringe Anteile an Feuchtigkeit ziel- und zweckgerichtet detektiert werden.

Besonders bevorzugt ist vorgesehen, dass der Feuchtesensor eine Sensorelektronik aufweist, wobei die Sensorelektronik eine Sendeeinrichtung aufweist, die zur drahtlosen Übertragung von Informationen ausgebildet ist. Durch die Sendeeinrichtung kann insbesondere ein Austausch an Informationen mit einer Empfangseinrichtung, die insbesondere extern vorgesehen ist, erfolgen. Darüber hinaus kann die Sendeeinrichtung auch zur Alarmgebung bzw. zur Hinweisgebung für einen außenstehenden Betrachter im Hinblick auf eintretende Feuchtigkeit genutzt werden, so dass das Vorhandensein der durch den Feuchtesensor detektierten Feuchtigkeit auch außenstehenden Beobachtern rechtzeitig mitgeteilt wird. Letztlich dient die Sendeeinrichtung zur Übertragung der durch den Feuchtesensor aufgenommenen Messdaten.

Des Weiteren betrifft die vorliegende Erfindung ein System mit einer Baufolie oder einer eine Mehrzahl von Streifen einer Baufolie aufweisenden Unterbedachung nach einer der vorgenannten Ausführungsformen und einer Empfangseinrichtung, wobei Informationen der Sendeeinrichtung berührungslos an die Empfangseinrichtung übertragbar sind, vorzugsweise wodurch die Empfangseinrichtung derart ausgebildet ist, dass der Feuchtesensor lokalisierbar und/oder identifizierbar ist.

Letztlich versteht es sich, dass bevorzugte Ausführungsformen der Baufolie sich gleichfalls auch auf das erfindungsgemäße System anwenden lassen. Zur Vermeidung von unnötigen Wiederholungen sei im Hinblick auf Vorteile und bevorzugte Ausführungsformen auf die vorherigen Ausführungen verwiesen.

Das erfindungsgemäße System ermöglicht es, dass in der Baufolie bzw. Unterbedachung integrierte Feuchtesensoren bei einer Detektion von Feuchtigkeit lokalisierbar sind, so dass ziel- und zweckgerichtet das Leck, durch das die Feuchtigkeit in die Gebäudehülle eintritt, ermittelt und folglich auch rechtzeitig - ohne dass größere Folgeschäden entstehen - behoben werden kann.

Gerade bei großen Flächen, die eine aus Reihen der Baufolie gebildete Teil einer Gebäudehülle bzw. eine Gebäudehülle aufweisen, ermöglicht eine Kommunikation zwischen der Sendeeinrichtung des Feuchtesensors und einer, insbesondere externen, Empfangseinrichtung die Möglichkeit, dass der Austausch der Informationen zum einen rechtzeitig erfolgt und zum anderen auch die Kosten zur Behebung eines Lecks in der Unterbedachung reduziert werden können.

Eine Lokalisation des Feuchtesensors kann über GSM (internationaler Standard für digitale Funknetze), GPS (Global Positioning System), NFC (Nahfeldkommunikation, englisch Near Field Communication) und/oder Lokalisierung einer vom Feuchtesensor ausgesendeten Sender-ID und/oder vom Feuchtesensor ausgesendeten Identifikationsinformationen erfolgen.

Vorzugsweise weist der Feuchtesensor vorgesehen zur Detektion von Feuchtigkeit mit wenigstens zwei Elektroden auf, wobei eine erste Elektrode zumindest bereichsweise oberflächlich ein erstes Material und eine zweite Elektrode zumindest bereichsweise oberflächlich ein zweites Material aufweist und wobei sich das zweite Material von dem ersten Material unterscheidet, so dass bei Kontakt des ersten Materials und des zweiten Materials mit Feuchtigkeit eine elektrische Spannung entsteht.

Vorteilhafterweise bildet die erste Elektrode eine Anode und die zweite Elektrode eine Kathode bei Kontakt des ersten Materials und des zweiten Materials mit Feuchtigkeit. Zwischen der Anode und der Kathode entsteht eine Spannung, die insbesondere zur Signal- und/oder Alarmgebung und/oder zum Informationstransfer bzw. zur Stromversorgung nutzbar ist. Durch die erst bei Kontakt mit Feuchtigkeit entstehende Spannung ist es möglich, einen Feuchtesensor bereitzustellen, der insbesondere ausschließlich dann detektiert und gegebenenfalls ein entsprechendes Signal aussendet, wenn Feuchtigkeit in Kontakt mit der das erste Material aufweisenden Oberfläche der ersten Elektrode und der das zweite Material aufweisenden Oberfläche der zweiten Elektrode kommt. So ist es möglich, einen aktiven Sensor bereitzustellen, dessen Energiezufuhr durch ihn selbst - nämlich durch das Messprinzip - gewährleistet wird und der keine externe Stromversorgung benötigt. Derartige Sensoren werden als aktive Aufnehmer bezeichnet.

Die zu detektierende Feuchtigkeit kann einen Feuchtigkeitsfilm zumindest bereichsweise auf der Oberfläche, insbesondere auf den das erste und das zweite Material aufweisenden Oberflächenbereichen, bilden und/oder die zu detektierende Feuchtigkeit ist der Feuchtigkeitsfilm.

Insbesondere kann als Feuchtigkeit eine die Elektroden direkt und/oder indirekt miteinander verbindende Flüssigkeit vorgesehen sein. Letztlich kann auch die Feuchtigkeit die Elektroden direkt und/oder indirekt miteinander verbinden.

Unter einer direkten Verbindung der Elektroden über die Feuchtigkeit wird ein durchgehender, insbesondere ununterbrochener, Feuchtigkeitsfilm bzw. eine durchgehende Flüssigkeit verstanden, die die Elektroden direkt bzw. unmittelbar miteinander verbindet. Der Feuchtigkeitsfilm und/oder die Flüssigkeit kann sich letztlich zumindest bereichsweise entlang des zwischen den Elektroden vorhandenen Freiraums erstrecken und/oder zwischen den Elektroden vorgesehen sein. Folglich sind die Elektroden elektrisch beim und/oder nach dem Entstehen einer Spannung über die Feuchtigkeit verbunden.

Als indirekte Verbindung wird hingegen verstanden, dass die das erste Material kontaktierende Feuchtigkeit und/oder der Feuchtigkeitsfilm nicht unmittelbar das zweite Material kontaktiert, wobei das zweite Material auch durch eine Feuchtigkeit und/oder einen Feuchtigkeitsfilm kontaktiert wird, insbesondere so dass kein zumindest bereichsweise sich entlang des Freiraums zwischen den Elektroden erstreckender Feuchtigkeitsfilm vorhanden ist. Die das erste Material und das zweite Material kontaktierenden Feuchtigkeiten sind jedoch miteinander elektrisch leitend verbunden, insbesondere so dass die erste Elektrode elektrisch leitend mit der zweiten Elektrode bei Kontakt des ersten und des zweiten Materials mit Feuchtigkeit verbunden werden kann.

Als zu detektierende Feuchtigkeit ist insbesondere eine auf Wasser basierende Feuchtigkeit vorgesehen. Letztlich versteht es sich, dass auch eine Flüssigkeit mittels des Feuchtesensors detektiert werden kann. Als Flüssigkeit ist insbesondere Wasser vorgesehen.

Ganz besonders bevorzugt ist vorgesehen, dass eine Mehrzahl an Feuchtesensoren, insbesondere im Dachbereich und/oder in einer Gebäudehülle, vorzugsweise angeordnet auf Flachdachbahnen, Dampfbremsen, Fassadenbahnen und/oder Unterdachbahnen, eingesetzt wird, wobei die Feuchtesensoren nicht untereinander verkabelt sind. Jeder Sensor kann sich autark mit Energie versorgen; und zwar nur in dem Fall, wenn auch Feuchtigkeit detektiert wird. Solange keine Feuchtigkeit vorhanden ist, ist der Feuchtesensor sozusagen im "Ruhe-Modus".

Die Feuchtigkeit wirkt wie eine Elektrolytlösung bzw. bildet eine Elektrolytlösung bei Kontakt mit dem ersten Material und dem zweiten Material. Als Elektrolytlösung kann ein flüssiges Material verstanden werden, das bewegliche Ionen und/oder Ladungsträger enthält. Die als Elektrolytlösung wirkende Feuchtigkeit kann - wie zuvor erwähnt - die Elektroden direkt und/oder indirekt derart elektrisch miteinander verbinden, so dass zwischen den Elektroden eine Spannung entstehen kann. Die entstehende Spannung kann anschließend weiterverwendet werden.

Des Weiteren ergibt sich durch den erfindungsgemäßen Feuchtesensor eine sehr wirtschaftliche Methode zur Detektion von Feuchtigkeit, insbesondere im Dachbereich, da Wartungskosten und laufende Betriebskosten entfallen. Zudem ist die Installation des erfindungsgemäßen Feuchtesensors sehr einfach und nur mit geringen Kosten verbunden, da eine Verkabelung des Feuchtesensors bzw. eine Verbindung des Feuchtesensors zu einer externen Energieversorgungseinrichtung und/oder zu den weiteren Feuchtesensoren erfindungsgemäß entfallen kann.

Erfindungsgemäß ist vorgesehen, dass die erste Elektrode aus dem ersten Material bestehen kann und/oder das erste Material zumindest bereichsweise oberflächlich aufweist. Ein bereichsweises oberflächliches Aufweisen ist derart zu verstehen, dass zumindest in einem Oberflächenbereich das Material vorgesehen ist, so dass bei Kontakt mit der Feuchtigkeit eine, insbesondere elektrochemische, Reaktion hervorgerufen wird. Letztlich ist also das erste Material in einem Reaktionsbereich, der oberflächlich auf der Elektrode vorgesehen ist, angeordnet. Zudem können auch mehrere weitere Materialien in der jeweiligen Elektrode vorhanden sein, die insbesondere eine höhere Spannung entstehen lassen und/oder zu dieser beitragen oder die zumindest im Wesentlichen keinen Einfluss auf die zwischen den Elektroden entstehende Spannung haben.

Bei einer besonders bevorzugten Ausführungsform ist vorgesehen, dass die zwei Elektroden ein galvanisches Element bilden und/oder als Bestandteil eines galvanischen Elementes ausgebildet sind. Insbesondere bilden die zwei Elektroden eine Volta-Zelle bzw. eine Volta-Einheit. Als galvanisches Element ist eine Energieumwandlungseinrichtung zu verstehen, die chemische Energie in elektrische Energie umwandelt.

So kann eine Kombination von zwei verschiedenen Elektroden und einer Elektrolytlösung ein galvanisches Element bilden. Das galvanische Element kann als Gleichspannungsquelle dienen. Der charakteristische Wert ist die eingeprägte Spannung. Bei einem galvanischen Element sind die Elektroden elektrisch miteinander über die das erste und/oder das zweite Material kontaktierende Feuchtigkeit verbunden.

Bei einem Volta-Element ist vorgesehen, dass die beiden Elektroden direkt über dieselbe, vorzugsweise als Elektrolytlösung ausgebildete, Feuchtigkeit miteinander verbunden sind, insbesondere wobei die Feuchtigkeit den sich zwischen den Elektroden ergebenden Freiraum überbrückt und/oder zumindest bereichsweise ausfüllt. Zwischen den über die Feuchtigkeit elektrisch verbundenen Elektroden entsteht eine elektrische Spannung, die gegebenenfalls einem elektrischen Verbraucher unmittelbar oder mittelbar zuführbar ist.

Der erfindungsgemäße Feuchtesensor bildet erst dann ein galvanisches Element, wenn die Elektroden, insbesondere das erste Material und das zweite Material, in Kontakt mit einer, vorzugsweise als Elektrolytlösung ausgebildeten, Feuchtigkeit kommen. Vorzugsweise kontaktiert die Elektrolytlösung zumindest bereichsweise das erste Material der ersten Elektrode und das zweite Material der zweiten Elektrode, so dass eine Spannung zwischen den Elektroden entstehen kann. Sofern das galvanische Element durch den Feuchtesensor gebildet wird, kann die entstehende Spannung zur Signal- und/oder Alarmgebung genutzt werden.

Die Funktion der galvanischen Zelle beruht auf einer Redoxreaktion. Reduktion und Oxidation laufen räumlich getrennt in und/oder an der ersten und der zweiten Elektrode ab.

Bei der Erfindung sind die Elektroden üblicherweise elektrisch miteinander über die Feuchtigkeit verbunden. Vorzugsweise können voneinander getrennte Feuchtigkeiten durch Verbinden der beiden Halbzellen - d.h. der mit der Feuchtigkeit kontaktierten Elektrode - mit einem Elektronenleiter und/oder einen lonenleiter elektrisch leitend miteinander verbunden werden, so dass der Stromkreis geschlossen ist. Als Halbzelle kann eine mit einer als Elektrolytlösung ausgebildeten Feuchtigkeit in Kontakt stehende Elektrode verstanden werden.

Die entstehende Spannung hängt insbesondere von der Art des ersten und des zweiten Materials, der Konzentration in der Lösung der jeweiligen Halbzelle, der Ionen, dem pH-Wert sowie der Temperatur ab. Beim Entladen von galvanischen Zellen ist der Minuspol die Anode und der Pluspol die Kathode. An der Kathode findet die Reduktion statt, wobei an der Anode die Oxidation stattfindet.

Die galvanische Zelle liefert letztlich so lange eine Spannung, bis ein elektrochemisches Gleichgewicht erreicht worden ist. Insbesondere entsteht immer dann eine Spannung, wenn sich zwei unterschiedliche Metalle in einer, vorzugsweise als Elektrolytlösung ausgebildeten, Feuchtigkeit befinden. Dies ist insbesondere auf die jeweilige Tendenz der Metalle in Lösung zu gehen und dabei Ionen zu bilden, die so genannte Lösungstension, zurückzuführen. Neben dem Daniell-Element, also Kupfer und Zink aufweisende Elektroden, kann so beispielsweise auch aus Kupfer- und Silberelektroden ein galvanisches Element erzeugt werden.

Die Elektrolytlösung kann durch einen zumindest in der Feuchtigkeit teilweise gelösten Elektrolytbildner gebildet werden. Vorzugsweise weist der Feuchtesensor den Elektrolytbilder auf und/oder der Elektrolytbildner ist dem Feuchtesensor zugeordnet, insbesondere wobei der Elektrolytbildner in der unmittelbaren Umgebung zu den Elektroden und/oder dem Feuchtesensor angeordnet ist. Als Elektrolytbildner wird eine chemische Verbindung verstanden, die im flüssigen oder gelösten Zustand in Ionen dissoziiert ist, die sich unter dem Einfluss eines elektrischen Feldes gerichtet bewegen.

Insbesondere kann vorgesehen sein, dass der Elektrolytbildner den Säureanteil der das erste und/oder das zweite Material kontaktierenden Feuchtigkeit erhöht.

Vorzugsweise ist zumindest bereichsweise auf der Oberfläche der ersten Elektrode und/oder der zweiten Elektrode eine Beschichtung vorgesehen. Insbesondere ist die Beschichtung auf dem das erste Material aufweisenden ersten Oberflächenbereich und/oder auf dem das zweite Material aufweisenden zweiten Oberflächenbereich vorgesehen.

Die Beschichtung kann zumindest bereichsweise die Elektrode schützen, insbesondere vor Korrosion und/oder mechanischer Belastung. Die Beschichtung kann demzufolge als Korrosionsschutz ausgebildet sein.

Neben und/oder alternativ zu dem Korrosionsschutz ist auch denkbar, dass die Beschichtung zur Bildung einer verbesserten Elektrolytlösung bei Kontakt des ersten Materials und des zweiten Materials mit Feuchtigkeit beiträgt, vorzugsweise indem der Säureanteil und/oder die Konzentration der dissoziierten freien Ladungsträger der Feuchtigkeit erhöht wird. So kann vorgesehen sein, dass die Beschichtung Zitronensäurepulver und/oder ein Oxalessigsäure, Mulonsäure, Glutarsäure, Chinasäure und/oder Vitamin C aufweisendes Pulver aufweist, das sich bei Kontakt mit Feuchtigkeit, insbesondere in der Flüssigkeit, löst.

Die Beschichtung kann ferner mit Wasser mischbar und/oder in Wasser löslich sein. Dies bietet sich insbesondere dann an, wenn die Beschichtung auch oberhalb des ersten Materials und/oder des zweiten Materials angeordnet ist, so dass bei Kontakt der Beschichtung mit Feuchtigkeit auch das erste Material und das zweite Material mit Feuchtigkeit kontaktierbar ist.

Letztlich können durch die Beschichtung verschiedene Möglichkeiten bereitgestellt werden, die insbesondere auch miteinander kombiniert werden können.

Bei einer besonders bevorzugten Ausführungsform ist vorgesehen, dass das erste Material und das zweite Material ein Metall aufweisen. Vorzugsweise sind zwei unterschiedliche Metalle vorgesehen, die bei Kontakt mit Feuchtigkeit eine elektrische Spannung erzeugen.

Die Metalle sind insbesondere ausgewählt aus der elektrochemischen Spannungsreihe, die eine Auflistung der Redox-Paare nach ihrem Standardpotential darstellt. Bei Metallen wird die elektrochemische Spannungsreihe auch Redox-Reihe genannt. Aus der elektrochemischen Spannungsreihe lässt sich das Redox-Verhalten, das insbesondere zu dem Entstehen der elektrischen Spannung beiträgt, ableiten. Jede Redox-Reaktion kann so durch zwei Paare beschrieben werden und aus der elektrochemischen Spannungsreihe lässt sich die Richtung der Reaktion vorhersagen. Das Redox-Potential wiederum ist ein Maß für die Bereitschaft der Ionen, die Elektronen aufzunehmen. Die Ionen der Edelmetalle nehmen bereitwilliger Elektronen als die Ionen unedler Metalle auf.

Die zwischen zwei elektrisch verbundenen Elektroden, die jeweils zwei unterschiedliche Metalle aufweisen, entstehende Spannung ist insbesondere gleich der Differenz der Standardelektrodenpotentiale, die zu den Redox-Paaren in den Elektrodenräumen gehören und in der elektrochemischen Spannungsreihe tabelliert sind. Insbesondere kann so die entstehende Spannung einer galvanischen Zelle bzw. eines galvanischen Elementes bestimmt werden.

Vorzugsweise weist das erste Material ein negatives Standardpotential auf. Insbesondere kann die erste Elektrode als Anode ausgebildet sein, wobei die Anode beim Entladen der galvanischen Zelle den Minuspol bildet.

Zudem kann das zweite Material ein positives Standardpotential aufweisen. Die zweite Elektrode kann wiederum als Kathode ausgebildet sein, wobei die Kathode beim Entladen der galvanischen Zelle den Pluspol bildet.

Besonders bevorzugt ist, dass das erste Material ein unedles Metall aufweist. In diesem Zusammenhang bietet sich insbesondere an, dass das zweite Material ein edles Metall aufweist.

Vorzugsweise beträgt die Differenz der Standardelektrodenpotentiale zwischen 0,01 bis 6 V, bevorzugt zwischen 0,2 bis 4 V, weiter bevorzugt zwischen 1 bis 3 V.

Des Weiteren kann das erste Material Zink und/oder Nickel aufweisen. Insbesondere weist das zweite Material Platin, Silber, Gold, Kupfer und/oder Zinn auf. Besonders bevorzugt ist als Materialkombination des ersten Materials und des zweiten Materials Zink und Gold vorgesehen. Weitere vorteilhafte Materialkombinationen für die erste Elektrode und die zweite Elektrode im Hinblick auf die bei Feuchtigkeit entstehende Spannung sind Zink und Platin, Zink und Silber, Zink und Kupfer, Zink und Nickel und/oder Platin und Nickel. Bei einer Materialkombination von Zink und Nickel ist vorgesehen, dass das erste Material und das zweite Material ein negatives Standardpotential und ein unedles Metall aufweisen. Die vorteilhafte Materialzusammensetzung ergibt sich insbesondere aufgrund der Fähigkeit der Materialien, bei Kontakt mit Feuchtigkeit eine galvanische Zelle zu bilden.

Ganz besonders bevorzugt wird als erstes Material Zink vorgesehen, da Zink bzw. Zinkionen, sehr gut in die als Lösung ausgebildete Feuchtigkeit gehen bzw. übergehen.

Vorzugsweise ist vorgesehen, dass derjenige Oberflächenbereich der ersten Elektrode und/oder der zweiten Elektrode, der das erste Material und/oder das zweite Material aufweist, eine Fläche von 1 mm² bis 100 cm², bevorzugt von 100 mm² bis 50 cm², weiter bevorzugt von 0,1 cm² bis 10 cm², aufweist. Insbesondere liegt das erste Material und/oder das zweite Material auf den vorgenannten Oberflächen zumindest im Wesentlichen gleichverteilt vor.

Die Elektroden können quaderförmig und/oder stabförmig ausgebildet sein. Des Weiteren können die Elektroden als, vorzugsweise dünne, Metallschicht auf einer flexiblen Leiterplatte und/oder einem flexiblen Element aufgebracht worden sein, insbesondere wobei die als Metallschicht ausgebildete Elektrode eine Schichtdicke zwischen 10 nm bis 800 µm, bevorzugt von 100 nm bis 100 µm, aufweist.

Der Abstand zwischen den Elektroden und/oder die Breite des sich zwischen den Elektroden ergebenden Freiraums kann zwischen 0,01 mm bis 20 cm, bevorzugt von 0,1 mm bis 10 cm, weiter bevorzugt von 1 mm bis 5 cm, liegen. Letztlich hängt der Abstand, und damit die Ansprechgeschwindigkeit, vom jeweiligen Einsatzfall ab.

Bei einer weiteren ganz besonders bevorzugten Ausführungsform ist vorgesehen, dass der Feuchtesensor eine Sensorelektronik aufweist, die zum Betrieb mit elektrischer Energie durch die zwischen der ersten Elektrode und der zweiten Elektrode erzeugbaren elektrischen Spannung, vorzugsweise ausschließlich, versorgbar ist. Die vorgenannte elektrische Spannung entsteht letztlich dann, wenn eine Feuchtigkeit detektiert wird, wodurch die Sensorelektronik insbesondere nur bei einer Detektion von Feuchtigkeit mit elektrischer Energie versorgbar ist.

Folglich ist der Feuchtesensor insbesondere als aktiver Sensor ausgebildet, der elektrische Energie selbst erzeugt. Die erzeugte elektrische Energie kann besonders bevorzugt zur Versorgung der Sensorelektronik verwendet werden, insbesondere wobei die erzeugte elektrische Energie als einzige Quelle für elektrische Energie in dem Feuchtesensor vorgesehen ist. Die elektrische Energie wird letztlich aus der chemischen Energie und somit aus der Sensorumgebung gewonnen. Diese Energieumwandlung kann auch als "energy harvesting" (Energie-Ernte) bezeichnet werden.

Des Weiteren kann die Sensorelektronik eine Energiespeichereinrichtung aufweisen. Durch die Energiespeichereinrichtung kann der Feuchtesensor dazu eingerichtet sein, von den Elektroden stammende elektrische Energie zu speichern, vorzugsweise zu akkumulieren. Eine Akkumulation der elektrischen Energie bietet den Vorteil, dass auch bei einer geringen entstehenden elektrischen Spannung eine ausreichend große elektrische Energie zum Betrieb der Sensorelektronik gewonnen werden kann.

Insbesondere ist als Energiespeichereinrichtung ein Kondensator vorgesehen. Der Kondensator kann zwei elektrisch leitfähige Flächen, die Elektroden des Kondensators, die von einem isolierenden Material, dem Dielektrikum, voneinander getrennt sind, aufweisen. Die Energiespeichereinrichtung kann jedoch auch durch einen Elektrolytkondensator und/oder einen Akkumulator und/oder einen Superkondensator gebildet sein.

Die Energiespeichereinrichtung kann dazu ausgebildet sein, in einem Gleichstromkreis elektrische Ladung und die damit zusammenhängende elektrische Energie statisch zu speichern.

Insbesondere kann die Energiespeichereinrichtung sich durch die zwischen den Elektroden bei Kontakt mit Feuchtigkeit entstehende (Gleich-)Spannung aufladen. Nach dem Anlegen dieser Gleichspannung kann ein monotoner elektrischer Strom fließen, der die Elektroden des Kondensators gegenpolig auflädt, so dass sich im Kondensator eine stetig zunehmende Spannung einstellt.

Das sich aufbauende elektrische Potential auf den Elektroden der Energiespeichereinrichtung lässt im Raum zwischen den Elektroden der Energiespeichereinrichtung ein elektrisches Feld entstehen, dessen Feldstärke zu der aufgebrachten elektrischen Spannung proportional ist.

Vorzugsweise weist die Sensorelektronik eine Spannungserhöhungseinrichtung, insbesondere einen Aufwärtsregler, auf. Die Spannungserhöhungseinrichtung kann mit der Energiespeichereinrichtung und/oder der ersten und der zweiten Elektrode elektrisch verbunden sein, so dass sich die elektrische Spannung erhöht. Vorzugsweise wird die zwischen der ersten und der zweiten Elektrode erzeugte Spannung und/oder die Spannung der Energiespeichereinrichtung erhöht zur Verfügung gestellt.

Die Spannungserhöhungseinrichtung kann demzufolge die unmittelbar bei Kontakt mit Feuchtigkeit entstehende Spannung oder die, vorzugsweise akkumulierte, Spannung der Energiespeichereinrichtung erhöhen. Letztlich ist die Spannungserhöhungseinrichtung derart ausgebildet, dass weitere Bestandteile der Sensorelektronik ausreichend mit elektrischer Energie versorgbar sind.

Die Spannungserhöhungseinrichtung kann insbesondere derart ausgebildet sein, dass die Spannung auf bis zu 10 V, bevorzugt zwischen 1 V und 5 V, weiter bevorzugt zwischen 2 V bis 4 V, hochsetzbar und/oder erhöhbar ist. Die Spannungserhöhungseinrichtung kann letztlich als Hochsteller zur Erzeugung einer Betriebsspannung ausgebildet sein, wobei die Betriebsspannung höher als die Elektrodenspannung ist.

Insbesondere kann als Spannungserhöhungseinrichtung eine Ladungspumpe vorgesehen sein. Unter dem Begriff "Ladungspumpe" werden mehrere unterschiedliche elektrische Schaltungen zusammengefasst, die elektrische Spannungen im Wert vergrößern oder Gleichspannungen in der Polarität umkehren. Erfindungsgemäß wird eine Vergrößerung der elektrischen Spannung vorgesehen. Vorteilhaft an einer Ladungspumpe ist, dass diese ohne magnetische Bauelemente, wie Spulen oder Transformatoren, auskommt. Ganz besonders bevorzugt wird eine als Gleichspannungswandler ausgebildete Ladungspumpe vorgesehen. Ladungspumpen können elektrische Ladung mit Hilfe von elektrischen Kondensatoren transportieren, wobei durch periodische Umschaltung mit Schaltern eine hohe elektrische Ausgangsspannung erzeugt werden kann.

Ferner kann die Sensorelektronik eine Sendeeinrichtung zur drahtlosen Übertragung von Informationen aufweisen. Insbesondere kann die Sendeeinrichtung einen, vorzugsweise aktiven, RFID-Transponder aufweisen. Der RFID-Transponder kann als aktives Tag, insbesondere RFID-Tag, ausgebildet sein. Alternativ oder zusätzlich kann vorgesehen sein, dass die Sendeeinrichtung einen NFC-Sender (Near-Field-Communication-Sender) und/oder GSM-Sender (Global System for Mobile Communication) aufweist.

Vorzugsweise ist die Sendeeinrichtung, insbesondere der aktive RFID-Transponder, derart ausgebildet, dass kein externes Aktivierungssignal, insbesondere von einer Empfangseinrichtung und/oder einem RFID-Lesegerät, zur Übertragung der Informationen benötigt wird. Die Aktivierung erfolgt vorzugsweise, insbesondere automatisch, durch Versorgung mit elektrischer Energie.

Die Sendeeinrichtung kann durch die zwischen den Elektroden entstehende elektrische Spannung zumindest mittelbar versorgt und aktiviert werden. Nach Aktivierung der Sendeeinrichtung kann diese die Informationen, insbesondere drahtlos, übertragen, vorzugsweise über Radiofrequenzwellen.

RFID ist die Abkürzung für radio-frequency identification ("Identifizierung mit Hilfe elektromagnetischer Wellen"). RFID bezeichnet eine Technologie für Sender-Empfänger-Systeme zum automatischen und berührungslosen Identifizieren und/oder Lokalisieren von Objekten und Lebewesen mit Radiowellen. Der RFID-Transponder befindet sich insbesondere am Feuchtesensor und kann eine Antenne, einen analogen Schaltkreis, gegebenenfalls zum Empfangen, zum Senden, einen digitalen Schaltkreis und/oder einen permanenten Speicher aufweisen. Insbesondere ist ein aktiver RFID-Transponder vorgesehen, der seine eigene Energiequelle sowohl für die Versorgung des Mikrochips als auch für das Erzeugen eines modellierten Signals nutzt.

Letztlich kann die Sendeeinrichtung unmittelbar oder mittelbar mit elektrischer Energie durch die zwischen den Elektroden entstehende Spannung versorgt werden.

Die Sendeeinrichtung kann unmittelbar von der zwischen den Elektroden bei Kontakt des ersten und des zweiten Materials mit Feuchtigkeit entstehenden Spannung versorgt werden.

Vorzugsweise wird die Sendeeinrichtung mittelbar von der zwischen den Elektroden bei Kontakt des ersten und des zweiten Materials mit Feuchtigkeit entstehenden Spannung versorgt. Dabei ist die Sendeeinrichtung vorzugsweise von der Energiespeichereinrichtung mit elektrischer Energie versorgbar.

Alternativ oder zusätzlich kann die Sendeeinrichtung zum Betrieb vorzugsweise mit der erhöhten elektrischen Spannung der Spannungserhöhungseinrichtung versorgt werden. Die Spannungserhöhungseinrichtung kann letztlich dazu ausgebildet sein, dass die Sendeeinrichtung zum Betrieb mit der erhöhten elektrischen Spannung ausreichend versorgbar ist.

Insbesondere kann die Sendeeinrichtung durch die, vorzugsweise als Ladungspumpe ausgebildete, Spannungserhöhungseinrichtung und die Energiespeichereinrichtung mit elektrischer Energie versorgt werden.

Des Weiteren kann die Sendeeinrichtung mit elektrischer Energie von den Elektroden in Kombination mit der Energiespeichereinrichtung und/oder der Spannungserhöhungseinrichtung versorgbar sein.

Letztlich wird die Sendeeinrichtung insbesondere nur dann mit elektrischer Energie versorgt, wenn der Feuchtesensor eine Feuchtigkeit detektiert. Wird keine Feuchtigkeit detektiert, wird der Sendeeinrichtung auch keine elektrische Energie zugeführt, so dass die Sendeeinrichtung sozusagen "inaktiv" ist. Eine Aktivierung der Sendeeinrichtung kann letztlich nur dann erfolgen, wenn das erste Material und das zweite Material in Kontakt mit Feuchtigkeit kommen, wodurch eine elektrische Spannung entsteht.

Vorzugsweise erfolgt die Übertragung der Informationen durch die Sendeeinrichtung automatisch. Zudem kann eine Übertragung der Informationen über Funk vorgesehen sein, wobei in diesem Zusammenhang die Sendeeinrichtung als Funksensor ausgebildet ist.

Die Informationen können Ortsdaten und/oder Identifikationsdaten aufweisen. Alternativ oder zusätzlich kann auch vorgesehen sein, dass die Sendeeinrichtung ein akustisches oder visuelles Signal aussendet. Dieses Alarmsignal bzw. dieser Warnton kann zur Signalgebung bzw. zur Informierung über die erfasste Detektion von Feuchtigkeit dienen.

Bei einer weiteren Ausführungsform ist wenigstens eine Elektrode zumindest bereichsweise jeweils in einem Kapselungsmittel eingefasst. Das Kapselungsmittel kann derart ausgebildet sein, dass die wenigstens eine Elektrode vollumfänglich oder zumindest bereichsweise von dem Kapselungsmittel umgeben bzw. in dieses eingekapselt ist. Besonders bevorzugt sind beide Elektroden in einem Kapselungsmittel eingefasst.

Die Wandung des Kapselungsmittels kann insbesondere wenigstens einen, vorzugsweise kapillarförmigen, Durchgang aufweisen. Der Durchgang kann derart ausgebildet sein, dass die auf der außenseitigen Oberfläche des Kapselungsmittels, die der Elektrode abgewandt ist, vorhandene Feuchtigkeit über den Durchgang zu dem ersten Material und/oder dem zweiten Material der ersten Elektrode und/oder der zweiten Elektrode führbar ist. Letztlich kann also über das Kapselungsmittel die Feuchtigkeit gezielt zu denjenigen Oberflächenbereichen der Elektroden geführt werden, die das erste Material und/oder das zweite Material aufweisen. Das Kapselungsmittel kann insbesondere die Elektroden vor mechanischen Beanspruchungen schützen.

Bei einer weiteren Ausführungsform kann vorgesehen sein, dass in dem Feuchtesensor eine Mehrzahl von Elektrodenpaaren jeweils gebildet durch erste und zweite Elektroden vorgesehen ist. Die jeweils eine erste und zweite Elektrode aufweisenden Elektrodenpaare können in Reihe und/oder parallel geschaltet sein, vorzugsweise zur Erhöhung der bei Kontakt des ersten Materials und des zweiten Material mit Feuchtigkeit entstehenden elektrischen Spannung und/oder zur Reduktion des Innenwiderstands. Die Elektrodenpaare können jeweils identisch ausgebildet sein, wobei sie jeweils unterschiedliche erste und/oder zweite Materialien aufweisen.

Darüber hinaus kann der Feuchtesensor als Bestandteil eines Systems ausgebildet sein, wobei das System ferner eine Empfangseinrichtung umfasst, wobei Informationen der Sendeeinrichtung berührungslos an die Empfangseinrichtung übertragbar sind. Vorzugsweise ist hierdurch die Empfangseinrichtung dazu eingerichtet, dass der Feuchtesensor lokalisierbar und/oder identifizierbar ist.

In diesem Zusammenhang versteht es sich, dass das erfindungsgemäße System einen Feuchtesensor aufweisen kann, der gemäß wenigstens einer der vorgenannten bevorzugten Ausführungsformen ausgebildet ist. Insofern beziehen sich alle zuvor beschriebenen Vorteile und bevorzugten Ausführungsformen auch auf das erfindungsgemäße System, so dass zur Vermeidung von unnötigen Wiederholungen an dieser Stelle von weiteren Ausführungen hinsichtlich der vorteilhaften Ausbildung des Feuchtesensors - und des Systems - abgesehen wird.

Das System gewährleistet die Kommunikation der Sendeeinrichtung des Feuchtesensors mit einer, insbesondere externen bzw. räumlich entfernten, Empfangseinrichtung, die nicht an dem Feuchtesensor angeordnet sein muss. Die Sendeeinrichtung überträgt Informationen an die Empfangseinrichtung. Die Informationen können Ortsdaten und/oder Identifikationsdaten aufweisen.

Des Weiteren kann das System als ein RF-System (Radio-Frequency-System) und/oder FID-System (frequency identification), bevorzugt ein aktives RF-System und/oder FID-System, ausgebildet sein, das Informationen über Funk und/oder Radiowellen überträgt.

Beispielsweise kann der Feuchtesensor seinen Ort, vorzugsweise über ein Global-Positioning-System-Signal (GPS-Signal), ermitteln und/oder der Empfangseinrichtung übermitteln.

Alternativ oder zusätzlich ist es denkbar, dass die Sendeeinrichtung einen aktiven RFID-Transponder aufweist, so dass das System als aktives RFID-System ausgebildet ist. Das System überträgt zum einen bei einer Detektion von Feuchtigkeit ein Signal über die Sendeeinrichtung und empfängt zum anderen die Informationen mittels der Empfangseinrichtung.

Vorzugsweise ist in dem System eine Mehrzahl von Feuchtesensoren vorgesehen.

Bevorzugt kann die Empfangseinrichtung ein Zuordnungsmittel zur Auswertung der von der Sendeeinrichtung empfangenen Informationen aufweisen, vorzugsweise so dass anhand der von der Sendeeinrichtung übertragenen Informationen der Feuchtesensor nach Verarbeitung der Informationen mittels des Zuordnungsmittels identifizierbar ist. Insbesondere weist das Zuordnungsmittel hierzu eine Zuordnungstabelle auf.

Durch eine Identifizierung kann eine Lokalisierung erfolgen, so dass durch die Empfangseinrichtung einem Nutzer mitgeteilt werden kann, an welchem Ort der Feuchtesensor angeordnet ist bzw. welcher Feuchtesensor eine Feuchtigkeit detektiert hat. Dies bietet sich insbesondere dann an, wenn eine Vielzahl von Feuchtesensoren eingesetzt wird. Die Feuchtesensoren werden letztlich zur Detektion von Feuchtigkeit in einem vor Feuchtigkeit zu schützenden Bereich, beispielsweise auf einem Dach, verwendet. Dem Nutzer kann also ziel- und zweckgerichtet mitgeteilt werden, welcher Feuchtesensor eine Feuchtigkeit detektiert hat.

Insbesondere kann eine räumliche Distanz bzw. räumlicher Abstand zwischen der Sendeeinrichtung und der Empfangseinrichtung von über 1 m, bevorzugt zwischen 1 m und 100 m, weiter bevorzugt zwischen 2 m und 30 m, insbesondere zwischen 5 m bis 15 m, vorgesehen sein.

Ein Verfahren zur Detektion von Feuchtigkeit mit einem erfindungsgemäßen Feuchtesensor der vorgenannten Art kann vorgesehen sein, wobei Feuchtigkeit mit dem ersten Material und dem zweiten Material in Kontakt kommt, wodurch eine elektrische Spannung entsteht, die die Sendeeinrichtung unmittelbar oder mittelbar zum Betrieb mit elektrischer Energie versorgt, so dass die Sendeeinrichtung Informationen an die Empfangseinrichtung überträgt.

In diesem Zusammenhang versteht es sich, dass sich bevorzugte Ausführungsformen des Feuchtesensor und/oder des erfindungsgemäßen Systems auch auf das erfindungsgemäße Verfahren anwenden lassen. Zur Vermeidung von unnötigen Wiederholungen sei auf die vorherigen Ausführungen im Hinblick auf die Vorteile und die bevorzugten Ausführungsformen des Feuchtesensors und des erfindungsgemäßen Systems verwiesen.

Bei einer mittelbaren Versorgung der Sendeeinrichtung durch die zwischen den Elektroden entstehende Spannung kann vorgesehen sein, dass die Sensorelektronik eine Energiespeichereinrichtung und/oder eine Spannungserhöhungseinrichtung aufweist, über die die Sendeeinrichtung mit elektrischer Energie versorgbar ist. Bei einer unmittelbaren Versorgung der Sendeeinrichtung mit der elektrischen Spannung ist die Sendeeinrichtung an die Elektroden des Feuchtesensors angeordnet und elektrisch mit diesen verbunden. Die Sendeeinrichtung stellt einen Verbraucher der Sensorelektronik dar, der durch die - aufgrund des Messprinzips - während des Messens bzw. während der Detektion von Feuchtigkeit entstehende elektrische Spannung, insbesondere ausschließlich, versorgbar ist.

Des Weiteren betrifft die vorliegende Erfindung die Verwendung der Baufolie, des Feuchtesensors und/oder des Systems zur Leckdetektion und/oder zur Detektion von Feuchtigkeit in Dachbereichen, vorzugsweise bei Flach- und/oder Schrägdächern, und/oder unter einem Bodenbelag und/oder in Nassräumen und/oder zur Dichtigkeitskontrolle von Fassaden.

Die Ausrichtung des Feuchtesensors und/oder der den Feuchtesensor aufweisenden Trägerschicht und/oder der die Elektrode aufweisenden Vliesschicht ist vorzugsweise abhängig von der Art der Verwendung, insbesondere, ob die Verwendung auf einem Steildach oder einem Flachdach stattfindet.

Wird die Baufolie auf einem Steildach verwendet, ist der Feuchtesensor und/oder die den Feuchtesensor aufweisende Trägerschicht und/oder die die Elektrode aufweisende Vliesschicht vorzugsweise der Witterungsseite abgewandt bzw. dem Dachbereich zugewandt. Dementsprechend ist die vorzugsweise vorgesehene wenigstens eine Funktionsschicht der Witterungsseite zugewandt, sodass Feuchtigkeit infolge einer Leckage über den darunter angeordneten Feuchtesensor detektiert bzw. erfasst werden kann.

Wird die Baufolie dagegen auf einem Flachdach verwendet, ist der Feuchtesensor und/oder die den Feuchtesensor aufweisende Trägerschicht und/oder die die Elektrode aufweisende Vliesschicht vorzugsweise der Witterungsseite zugewandt bzw. dem Dachbereich abgewandt. Dementsprechend ist die vorzugsweise vorgesehene wenigstens eine Funktionsschicht der Witterungsseite abgewandt bzw. dem Dachbereich zugewandt. Damit der Feuchtesensor bzw. die den Feuchtesensor aufweisende Schicht den Witterungseinflüssen nicht unmittelbar ausgesetzt ist, ist vorzugsweise eine separate Abdichtungsbahn, vorzugsweise eine Bitumenbahn, vorgesehen, durch welche die Baufolie witterungsseitig abgedeckt wird. Tritt in der Abdichtungsbahn eine Leckage auf, wird dies dann entsprechend durch den Feuchtesensor detektiert.

Es versteht sich, dass die Ausrichtung auf dem Flachdach analog zur zuvor beschriebenen Ausrichtung auf dem Steildach erfolgen kann, insbesondere sofern auf die separate Abdichtungsbahn verzichtet wird. Dann fungiert vorzugsweise die Funktionsschicht als Witterungsschutz für den Feuchtesensor.

Darüber hinaus kann die Baufolie auch zur Leckdetektion an Dämmelementen, beispielsweise Dämmschichten oder Dämmplatten, eingesetzt bzw. verwendet werden. Hierzu wird die Baufolie direkt unter dem Dämmelement angeordnet, um über den Feuchtesensor eine durch das Dämmelement hindurchgetretene Feuchtigkeit zu erfassen.

Bei dieser Anordnung kann der Feuchtesensor sowohl dem Dämmelement zu- bzw. dem Dachbereich abgewandt als auch dem Dämmelement ab- bzw. dem Dachbereich zugewandt sein. Sofern auch ein Feuchtigkeitsdurchtritt bzw. eine Leckage an der Baufolie selbst detektiert werden soll, ist es bevorzugt, den Feuchtesensor auf oder an der dem Dämmelement abgewandten bzw. dem Dachbereich zugewandten Seite der Baufolie anzuordnen. Diese Anordnung ist insbesondere dann von Vorteil, wenn die Baufolie als Dampfbremse bzw. dampfbremsend ausgebildet ist.

Die erfindungsgemäße Verwendung zeichnet sich durch eine Langlebigkeit der Sensoren, eine entfallende externe Energieversorgung des Feuchtesensors und eine einfache Methode zur Bestimmung bzw. zur Detektion der Feuchtigkeit aus, die mit vergleichsweise geringen Herstellungs- und/oder Betriebskosten verknüpft ist.

Des Weiteren betrifft die Erfindung eine Verwendung eines Feuchtesensors nach einem der zuvor beschriebenen Ausführungsformen und/oder eines Systems nach einem der zuvor beschriebenen Ausführungsformen zur drahtlosen, insbesondere kabellosen und/oder batterielosen und/oder energieautarken, Detektion von Feuchtigkeit, insbesondere in einer Gebäudehülle, bevorzugt im Fassaden- und/oder Dachbereich.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehung.

Es zeigt:
- Fig. 1: eine schematische Ansicht des erfindungsgemäßen Feuchtesensors,
- Fig. 2: eine schematische Ansicht einer weiteren Ausführungsform des erfindungsgemäßen Feuchtesensors,
- Fig. 3: eine schematische perspektivische Ansicht der ersten Elektrode,
- Fig. 4: eine schematische perspektivische Ansicht der zweiten Elektrode,
- Fig. 5: eine schematische Querschnittsansicht einer weiteren Ausführungsform einer ersten Elektrode,
- Fig. 6: eine schematische Querschnittsansicht einer weiteren Ausführungsform einer zweiten Elektrode,
- Fig. 7: eine schematische Ansicht eines Systems,
- Fig. 8: eine schematische Ansicht einer weiteren Ausführungsform des Systems,
- Fig. 9: eine schematische Darstellung des Verfahrensablaufs,
- Fig. 10: eine schematische perspektivische Darstellung des RFIDTransponders,
- Fig. 11: eine schematische perspektivische Darstellung von einer durch Reihen der erfindungsgemäßen Baufolie gebildeten Unterbedachung,
- Fig. 12: eine schematische Querschnittsdarstellung der erfindungsgemäßen Baufolie,
- Fig. 13: eine schematische Querschnittsdarstellung einer weiteren Ausführungsform der erfindungsgemäßen Baufolie,
- Fig. 14: eine schematische Querschnittsdarstellung einer weiteren Ausführungsform der erfindungsgemäßen Baufolie,
- Fig. 15: eine schematische Querschnittsdarstellung einer weiteren Ausführungsform der erfindungsgemäßen Baufolie,
- Fig. 16: eine schematische Darstellung des erfindungsgemäßen Systems und
- Fig. 17: eine schematische perspektivische Darstellung einer eine erfindungsgemäße Baufolie aufweisenden Bedachung.
- Fig. 18: eine schematische perspektivische Darstellung von einer durch Reihen der erfindungsgemäßen Baufolie gebildeten Flachdachabdeckung,
- Fig. 19: eine schematische perspektivische Darstellung eines eine erfindungsgemäße Baufolie aufweisenden Flachdach.

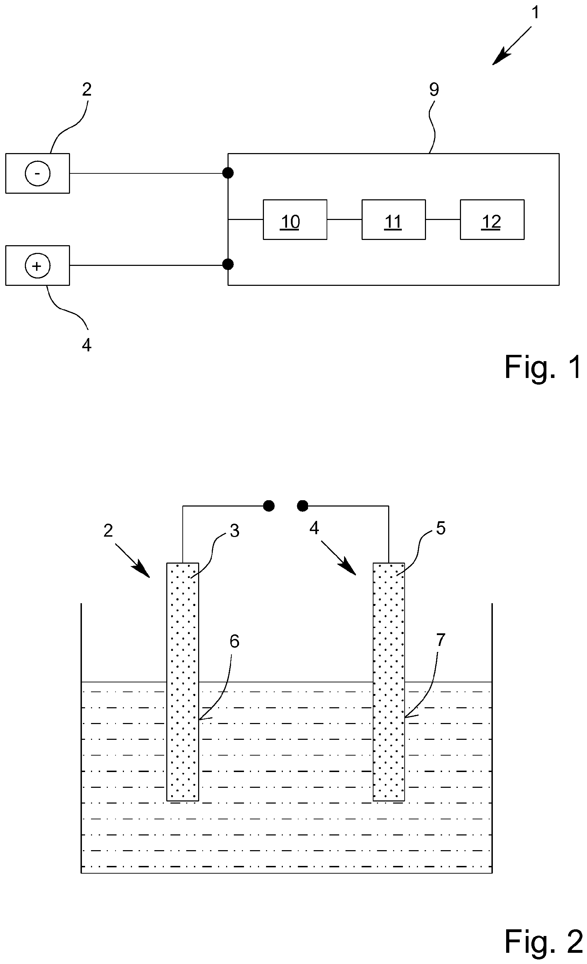

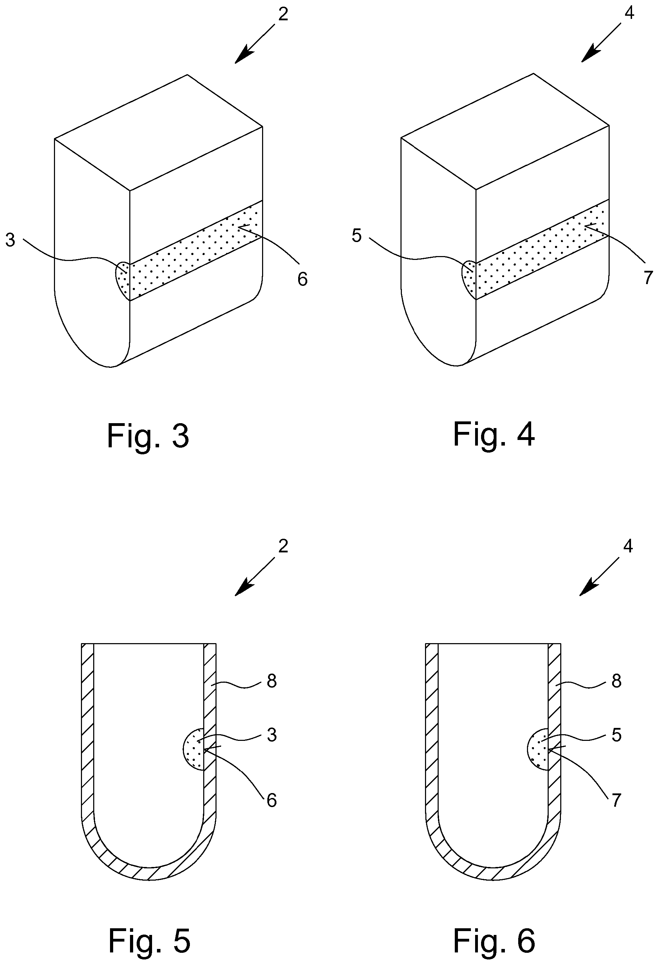

Fig. 1 zeigt einen Feuchtesensor 1 vorgesehen zur Detektion von Feuchtigkeit mit wenigstens zwei Elektroden 2, 4. Die in Fig. 1 dargestellte erste Elektrode 2 ist als Anode und die zweite Elektrode 4 als Kathode ausgebildet. Fig. 3 zeigt, dass die erste Elektrode 2 zumindest bereichsweise oberflächlich ein erstes Material 3 aufweist. Fig. 4 zeigt, dass die zweite Elektrode 4 zumindest bereichsweise oberflächlich ein zweites Material 5 aufweist. Bei den dargestellten Ausführungsformen ist vorgesehen, dass sich das zweite Material 5 von dem ersten Material 3 unterscheidet.

Zudem zeigt Fig. 2, dass bei Kontakt des ersten Materials 3 und des zweiten Materials 5 mit Feuchtigkeit eine elektrische Spannung entsteht. Die Elektroden 2, 4 sind elektrisch miteinander über die Feuchtigkeit verbunden. Die in Fig. 2 dargestellte Feuchtigkeit ist eine Flüssigkeit, die sich zumindest bereichsweise entlang des sich zwischen den Elektroden 2, 4 ergebenden Freiraums erstreckt und/oder diesen überbrückt.

Die Feuchtigkeit kann einen Feuchtigkeitsfilm oberflächlich auf den Elektroden 2, 4 bilden und somit das erste Material 3 und das zweite Material 5 kontaktieren. Als zu detektierende Feuchtigkeit kann Wasser vorgesehen sein.

Fig. 1 zeigt, dass die erste Elektrode 2 und die zweite Elektrode 4 elektrisch mit wenigstens einem Verbraucher verbunden sind.

Bei der in Fig. 1 dargestellten Ausführungsform ist vorgesehen, dass nur dann eine Spannung zwischen der ersten Elektrode 2 und der zweiten Elektrode 4 entsteht, wenn das erste Material 3 der ersten Elektrode 2 und das zweite Material 5 der zweiten Elektrode 4 mit Feuchtigkeit in Kontakt kommen. Weiter zeigen die Fig. 3 und 4, dass das erste Material 3 und das zweite Material 5 nicht nur oberflächlich auf den Elektroden 2, 4 vorgesehen sein können, sondern auch zumindest bereichsweise im Inneren der Elektroden 2, 4.

Des Weiteren zeigt Fig. 2, dass die erste Elektrode 2 aus dem ersten Material 3 und die zweite Elektrode 4 aus dem zweiten Material 5 besteht.

Ferner zeigt Fig. 2, dass die zwei Elektroden 2, 4 ein galvanisches Element bilden und/oder als Bestandteil eines galvanischen Elementes ausgebildet sind. Ein galvanisches Element wird letztlich dann gebildet, wenn das erste Material 3 und das zweite Material 5 in Kontakt mit Feuchtigkeit kommen.

Insbesondere ist die Feuchtigkeit bei Kontakt mit dem ersten Material 3 und dem zweiten Material 5 als Elektrolytlösung ausgebildet.

Fig. 3 zeigt, dass das erste Material 3 der ersten Elektrode 2 nicht auf der gesamten Oberfläche der ersten Elektrode 2 vorgesehen sein muss. In dem in Fig. 3 dargestellten Ausführungsbeispiel ist das erste Material 3 auf einem ersten Oberflächenbereich 6 vorgesehen.

Analog zeigt Fig. 4, dass das zweite Material 5 auf einem zweiten Oberflächenbereich 7 der zweiten Elektrode 4 vorgesehen ist, der sich nicht über die gesamte Oberfläche der zweiten Elektrode 4 erstreckt.

In Fig. 2 ist vorgesehen, dass die erste Elektrode 2 und die zweite Elektrode 4 auf ihrer gesamten Oberfläche jeweils das erste Material 3 das zweite Material 5 aufweisen.

Darüber hinaus zeigt Fig. 5, dass zumindest bereichsweise auf der ersten Elektrode 2 eine Beschichtung 8 vorgesehen ist. Analog zeigt Fig. 6, dass zumindest bereichsweise auf der Oberfläche der zweiten Elektrode 4 eine Beschichtung 8 vorgesehen ist. Die Beschichtung 8 ist außerdem auf dem ersten Oberflächenbereich 6 und dem zweiten Oberflächenbereich 7 vorgesehen.

Nicht dargestellt ist, dass die Beschichtung 8 derart ausgebildet ist, dass sie die Elektroden 2, 4 vor Korrosion und/oder mechanischer Beanspruchung zumindest bereichsweise schützt.

Darüber hinaus kann die Beschichtung 8 in Wasser mischbar bzw. in Wasser lösbar ausgebildet sein.

Ferner kann die Beschichtung 8 auch als Korrosionsbeschichtung ausgebildet sein.

Alternativ oder zusätzlich kann die Beschichtung 8 bei Kontakt mit einer Feuchtigkeit eine Elektrolytlösung gemeinsam mit der Feuchtigkeit bilden und/oder einen, insbesondere in der Feuchtigkeit lösbaren, Elektrolytbildner aufweisen, so dass die zwischen den Elektroden 2, 4 entstehende elektrische Spannung vergrößert werden kann.

Die entstehende elektrische Spannung kann zwischen 0,5 V bis 4 V, bevorzugt zwischen 0,8 V bis 1,3 V, liegen.

Nicht dargestellt ist, dass das erste Material 3 und das zweite Material 5 ein Metall aufweisen. Insbesondere kann das erste Material 3 ein negatives Standardpotential und/oder das zweite Material 5 ein positives Standardpotential aufweisen. Des Weiteren kann das erste Material 3 ein unedles Metall und/oder das zweite Material 5 ein edles bzw. gegenüber dem ersten Material 3, edleren Metall aufweisen. So kann vorgesehen sein, dass für das erste Material 3 Zink und das zweite Material 5 Kupfer eingesetzt wird. Weitere Materialkombinationen des ersten Materials 3 des zweiten Materials 5 sind Zink und Platin, Zink und Gold, Zink und Silber, Zink und Nickel und/oder Nickel und Platin.

Fig. 1 zeigt außerdem, dass der Feuchtesensor 1 eine Sensorelektronik 9 aufweist. Die Sensorelektronik 9 ist zum Betrieb mit elektrischer Energie durch die zwischen der ersten Elektrode 2 und der zweiten Elektrode 4 erzeugbare elektrische Spannung versorgbar.

Zudem ist in Fig. 1 dargestellt, dass die Sensorelektronik 9 eine Energiespeichereinrichtung 10 aufweist. Durch die Energiespeichereinrichtung 10 ist der Feuchtesensor 1 dazu eingerichtet, von den Elektroden 2, 4 stammende elektrische Energie zu speichern. Bei der in Fig. 1 vorgesehenen Ausführungsform wird die elektrische Energie akkumuliert, wobei die Energiespeichereinrichtung 10 als Kondensator ausgebildet ist.

Des Weiteren zeigt Fig. 1, dass die Sensorelektronik 9 eine Spannungserhöhungseinrichtung 11 aufweist. Bei dem dargestellten Ausführungsbeispiel ist die Spannungserhöhungseinrichtung 11 mit der Energiespeichereinrichtung 10 verbunden und wird durch die elektrische Energie der Energiespeichereinrichtung 10 gespeist bzw. mit elektrischer Energie versorgt.

In einer weiteren, nicht dargestellten Ausführungsform ist vorgesehen, dass die Spannungserhöhungseinrichtung 11 unmittelbar mit der ersten und der zweiten Elektrode 2, 4 elektrisch verbunden ist und die Eingangsspannung der Spannungserhöhungseinrichtung 11 die zwischen den Elektroden 2, 4 erzeugbare Spannung ist. Durch die Spannungserhöhungseinrichtung 11 kann die Spannung erhöht werden. Die erhöhte elektrische Spannung kann zum Betrieb weiterer Komponenten der Sensorelektronik 9 verwendet werden. Bei dem in Fig. 1 dargestellten Ausführungsbeispiel ist vorgesehen, dass als Spannungserhöhungseinrichtung 11 eine Ladungspumpe verwendet wird.

Ferner weist die Sensorelektronik 9 gemäß dem in Fig. 1 dargestellten Ausführungsbeispiel eine Sendeeinrichtung 12 zur drahtlosen Übertragung von Informationen auf. Als Informationen können sowohl Identifikationsdaten und/oder Ortsdaten, insbesondere GPS-Signale, vorgesehen sein.

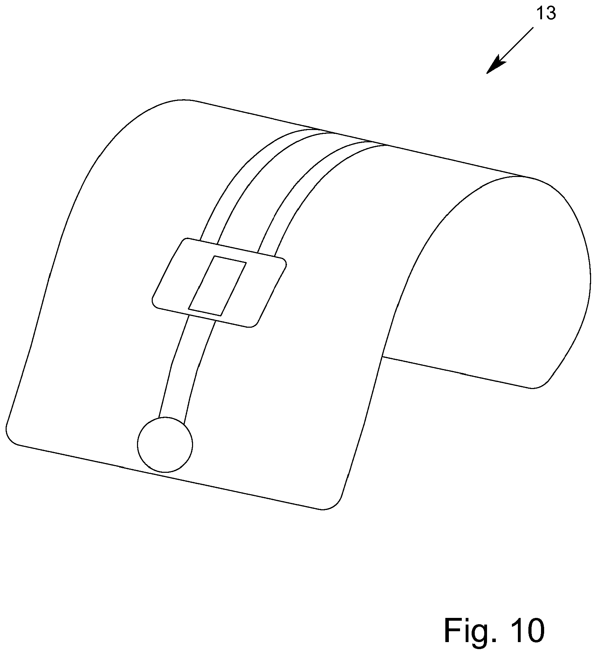

Nicht dargestellt ist, dass die Sendeeinrichtung 12 einen, vorzugsweise aktiven, RFID-Transponder 13 aufweist. Ein RFID-Transponder, der als Sendeeinrichtung 12 verwendet werden kann, ist in Fig. 10 dargestellt. Der in Fig. 10 dargestellte RFID-Transponder 13 ist als flexibles Element ausgebildet, das eine zumindest im Wesentlichen folienartige Struktur aufweist. Auf einer derartigen flexiblen Folie und/oder flexiblen Leiterplatte kann auch die erste Elektrode 2 und die zweite Elektrode 4 gemeinsam mit der Sensorelektronik 9 angeordnet sein.

Ferner ist nicht dargestellt, dass der Abstand zwischen den Elektroden 2, 4 und/oder die Breite des sich zwischen den Elektroden 2, 4 ergebenden Freiraums zwischen 0,01 mm bis 20 cm, bevorzugt zwischen 0,01 mm bis 10 cm, weiter bevorzugt zwischen 1 mm bis 5 cm, liegt.

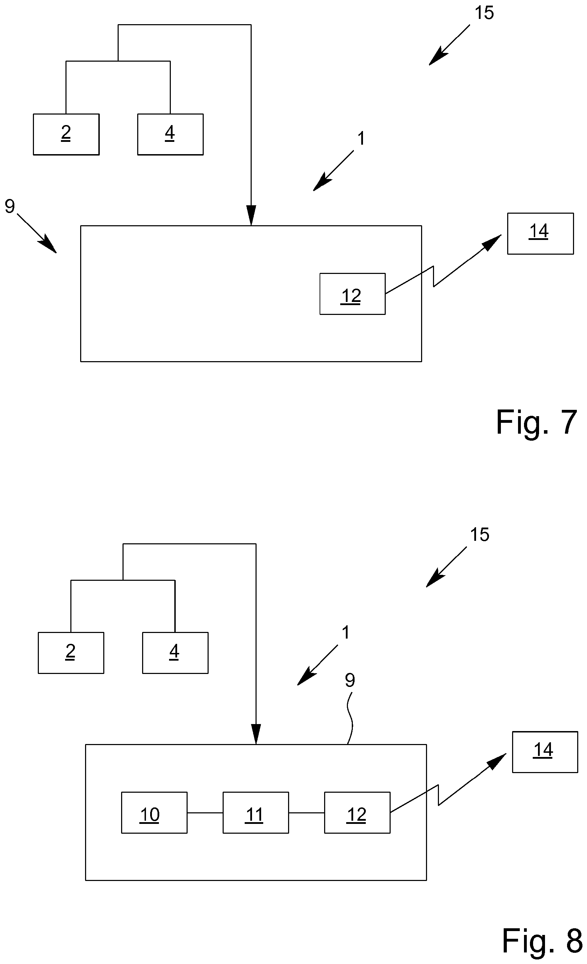

Fig. 7 und 8 zeigen ein System 15 mit einem Feuchtesensor 1 und einer Empfangseinrichtung 14. Die Sendeeinrichtung 12 des Feuchtesensors 1 kann Informationen berührungslos an die Empfangseinrichtung 14 übertragen. Bei der in Fig. 7 und 8 dargestellten Ausführungsform ist vorgesehen, dass die Empfangseinrichtung 14 derart ausgebildet ist, dass der Feuchtesensor 1 lokalisierbar und/oder identifizierbar ist. Bei der in Fig. 7 vorgesehenen Ausführungsform ist die Sendeeinrichtung 12 der Sensorelektronik 9 unmittelbar mit der ersten Elektrode 2 und der zweiten Elektrode 4 verbunden und wird zum Betrieb direkt mit der zwischen der ersten Elektrode 2 und der zweiten Elektrode 4 erzeugbaren elektrischen Spannung versorgt.

In Fig. 8 hingegen ist dargestellt, dass die Sensorelektronik 9 neben der Sendeeinrichtung 12 eine Energiespeichereinrichtung 10 und eine Spannungserhöhungseinrichtung 11 aufweist. Die zwischen den Elektroden 2, 4 bei Detektion von Feuchtigkeit erzeugbare elektrische Spannung wird zunächst an die Energiespeichereinrichtung 10 übertragen, in dieser akkumuliert, und anschließend der Spannungserhöhungseinrichtung 11 zugeführt, die die Spannung erhöht. Die Sendeeinrichtung 12 wird durch die mittels der Spannungserhöhungseinrichtung 11 erhöhte Spannung versorgt.

Nicht dargestellt ist, dass das System 15 als aktives RFID-System ausgebildet ist, wobei die Sendeeinrichtung 12 einen aktiven RFID-Transponder 13 aufweist. Weiter ist nicht dargestellt, dass alternativ ein passives RFID-System vorgesehen ist bzw. sein kann.

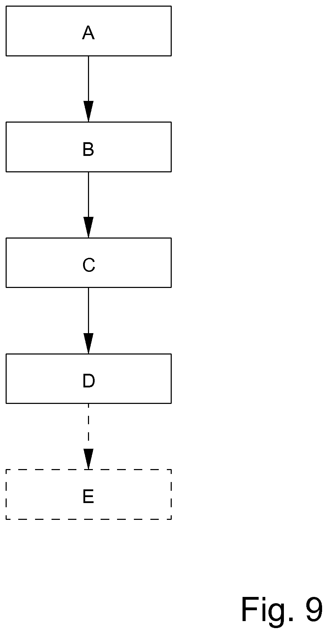

Außerdem zeigt Fig. 9 ein Verfahren zur Detektion von Feuchtigkeit mit einem Feuchtesensor 1. In dem Verfahrensschritt A kommt eine Feuchtigkeit, insbesondere eine Flüssigkeit, mit dem ersten Material 3 der ersten Elektrode 2 und dem zweiten Material 5 der zweiten Elektrode 4 in Kontakt. Die Feuchtigkeit liegt, insbesondere kontaktieren, demgemäß auf dem ersten Oberflächenbereich 6 der ersten Elektrode 2 und dem zweiten Oberflächenbereich 7 der zweiten Elektrode 4 auf.

In Verfahrensschritt B wird durch das Inkontaktkommen des ersten Materials 3 und des zweiten Materials 5 mit der Feuchtigkeit eine elektrische Spannung erzeugt bzw. eine elektrische Spannung entsteht aufgrund einer elektrochemischen Reaktion. Letztlich wird chemische Energie in elektrische Energie umgewandelt.

Zudem ist in Verfahrensschritt C vorgesehen, dass die Sendeeinrichtung 12 unmittelbar oder mittelbar zum Betrieb mit der entstandenen elektrischen Spannung aus Verfahrensschritt B versorgt wird. Bei einer unmittelbaren Versorgung der Sendeeinrichtung 12 ist vorgesehen, dass die Sendeeinrichtung 12 unmittelbar mit der ersten Elektrode 2 und der zweiten Elektrode 4 elektrisch verbunden ist. Bei einem mittelbaren Verbund ist vorgesehen, dass weitere Komponenten der Sensorelektronik 9, wie eine Energiespeichereinrichtung 10 und/oder eine Spannungserhöhungseinrichtung 11, mit der ersten Elektrode 2 und der zweiten Elektrode 4 elektrisch verbunden sind, die anschließend die Sendeeinrichtung 12 mit elektrischer Energie versorgen.

In Verfahrensschritt D ist wiederum vorgesehen, dass die Sendeeinrichtung 12 Informationen, insbesondere Ortsdaten und/oder Identifikationsdaten aufweisende Informationen, überträgt. Es ist möglich, dass die Sendeeinrichtung 12 ein akustisches Signal aussendet. Die Sendeeinrichtung 12 überträgt in Verfahrensschritt D die Informationen an die Empfangseinrichtung 14 des Systems 15.

Schließlich kann optional in Verfahrensschritt E vorgesehen sein, dass die Empfangseinrichtung 14 die durch die Sendeeinrichtung 12 übertragenen Informationen auswertet, insbesondere mittels eines nicht dargestellten Zuordnungsmittels. Durch eine Auswertung über die Empfangseinrichtung 14 kann der Feuchtesensor 1 identifiziert und/oder lokalisiert werden.

Fig. 10 zeigt die als aktiven RFID-Tag bzw. RFID-Transponder 13 ausgebildete Sendeeinrichtung 12 in Art einer flexiblen Folienkonstruktion, vorzugsweise auf einer flexiblen Leiterplatte.

Nicht dargestellt ist, dass der aktive RFID-Tag und/oder die Sendeeinrichtung auf einer rigiden und/oder starren Leiterplatte aufgebracht und/oder an diese angeordnet ist.

Nicht dargestellt ist, dass eine Mehrzahl von ersten Elektroden 2 und zweiten Elektroden 4 für einen Feuchtesensor 1 vorgesehen sein kann, insbesondere wobei die einzelnen Elektrodenpaare (jeweils eine erste Elektrode 2 und eine zweite Elektrode 4) in Reihe und/oder parallel geschaltet sind.

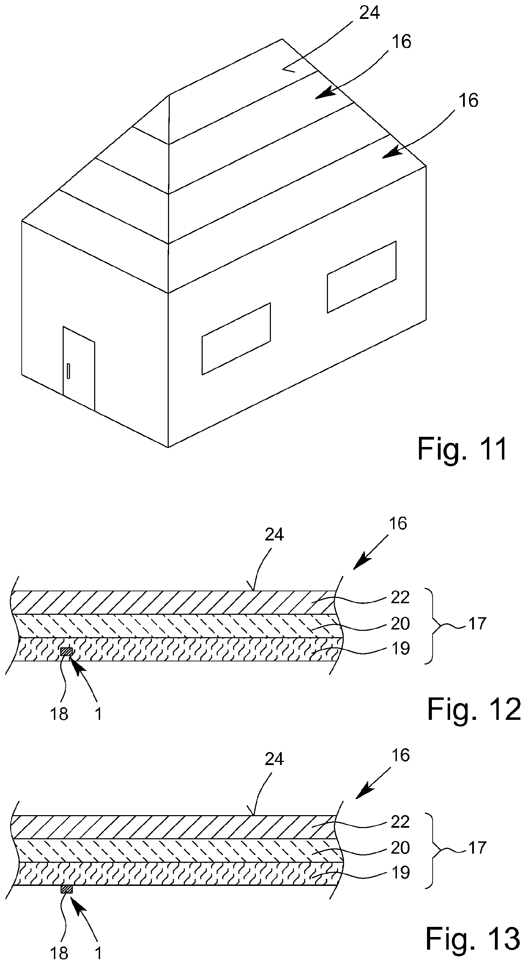

Fig. 11 zeigt eine Baufolie 16, die als Unterdachbahn, insbesondere Unterdeck- und/oder Unterspannbahn, eingesetzt werden kann.

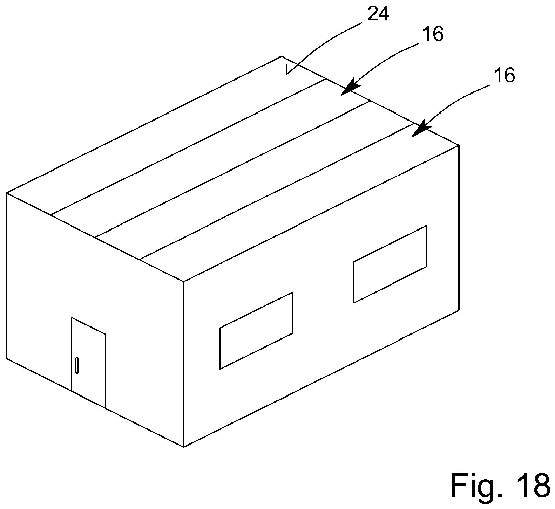

Fig. 18 zeigt, dass die Baufolie 16 auch als Flachdachbahn zur Abdichtung eines Flachdachs eingesetzt werden kann. Beispielsweise können oberhalb, der Witterungsseite zu gewandt, der Baufolie auf der Oberseite 24 weitere Abdichtungsbahnen oder eine Abdichtungsbahn zur Bildung einer Gebäudehülle verlegt werden. Es ist auch möglich, dass mittelbar oder unmittelbar oberseitig der Baufolie 16 eine Kiesschüttung und/oder eine Begrünung vorgesehen ist, die insbesondere den oberseitigen, der Witterungsseite zugewandten, Abschluss des Flachdachs bilden können.

Nicht dargestellt ist, dass die Baufolie auch als Fassadenbahn und/oder Dampfbremse eingesetzt werden kann.

Fig. 12 zeigt, dass die Baufolie 16 einen ein- oder mehrlagigen Schichtaufbau 17 aufweist. In der Baufolie 16 bzw. an der Baufolie 16 ist wenigstens ein Feuchtesensor 1 vorgesehen, der zur Detektion von Feuchtigkeit verwendet wird.

Der Feuchtesensor 1 ist als aktiver Aufnehmer ausgebildet sein. Ein aktiver Aufnehmer zeichnet sich dadurch aus, dass er aus sich selbst heraus - aufgrund des Messprinzips - seine eigene elektrische Energieversorgung gewährleistet. Es wird keine externe Hilfsenergie, insbesondere elektrische Hilfsenergie, benötigt.

Ferner ist vorgesehen, dass der Feuchtesensor 1 wenigstens eine Elektrode 18 aufweist und die Elektrode 18 im unmittelbaren Kontakt mit der Vliessschicht 19 ist.

In Fig. 12 ist dargestellt, dass die Elektrode 18 in der Vliesschicht 19 integriert ist bzw. in der Vliesschicht 19 angeordnet ist.

In Fig. 12 ist nicht dargestellt, dass der Elektrode 18 eine Gegenelektrode zugeordnet ist, insbesondere ist nicht dargestellt, dass der Feuchtesensor 1 zwei Elektroden 18 aufweisen kann. Ferner kann die Gegenelektrode auch im unmittelbaren Kontakt zu der Vliesschicht 19 stehen, muss es aber nicht. Die Gegenelektrode kann grundsätzlich auch außerhalb der Baufolie 16 angeordnet sein, insbesondere durch die Umgebung gebildet werden.

Fig. 13 zeigt hingegen, dass die Elektrode 18 des Feuchtesensors 1 an der Vliesschicht 19 angeordnet ist.

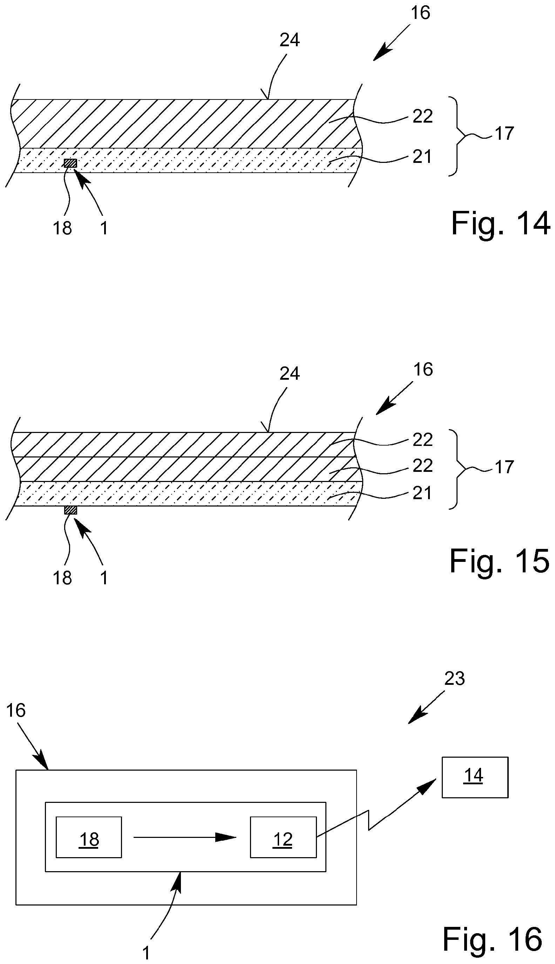

Zudem zeigt Fig. 12, dass der Schichtaufbau 17 wenigstens eine Funktionsschicht 20 aufweist. Darüber hinaus ist in Fig. 14 dargestellt, dass der Schichtaufbau 17 wenigstens eine Trägerschicht 21 aufweist. Bei dem in Fig. 14 dargestellten Ausführungsbeispiel ist keine Vliesschicht 19 vorgesehen. Die Elektrode 18 des Feuchtesensors 1 kann an die bzw. in die Trägerschicht 21 integriert worden sein bzw. im unmittelbaren Kontakt zu der Trägerschicht 21 stehen.

Die Oberseite 24 der Baufolie 16 bzw. des mehrlagigen Schichtaufbaus 17 ist der Witterungsseite - wie aus Fig. 11 ersichtlich - zugewandt.

Die in Fig. 12 gezeigte Funktionsschicht 20 ist diffusionsoffen, wasserdicht und atmungsaktiv ausgebildet. Die Funktionsschicht 20 kann ferner wasserdampfdurchlässig, insbesondere aufgrund der Ausbildung als mikroporöse Membran, ausgebildet sein. Die Funktionsschicht 20 kann die für eine als Dachfolie, insbesondere Unterdachbahn ausgebildete, Baufolie 16 bzw. für eine Unterbedachung bzw. Gebäudehülle wesentlichen Funktionen bereitstellen.

Bei der in Fig. 13 gezeigten Ausführungsform ist vorgesehen, dass die Funktionsschicht 20 der als Flachdachbahn ausgebildeten Baufolie 16 wasserdicht und diffusionssperrend, insbesondere diffusionsdicht, ausgebildet ist. In weiteren Ausführungsformen kann die als Flachdachbahn ausgebildete Baufolie 16 zudem auch dampfbremsend und/oder dampfsperrend ausgebildet sein. Die als Flachdachbahn ausgebildete Baufolie 16 kann als, insbesondere selbstklebende, Bitumenbahn und/oder Dachabdichtungsbahn ausgebildet sein.

Die in Fig. 13 gezeigte Baufolie 16 bzw. die Funktionsschicht 20 weist einen S_{d}-Wert von größer gleich 2 m auf. In weiteren Ausführungsformen ist vorgesehen, dass der S_{d}-Wert von 50 bis 2500 m beträgt.

Nicht dargestellt ist, dass eine als Fassadenbahn ausgebildete Baufolie 16 windbremsend, wasserdicht, UV-beständig und/oder diffusionsoffen ausgebildet sein, insbesondere wobei die Baufolie 16 zudem auch als Dämmschutzbahn ausgebildet sein kann.

Ferner ist nicht dargestellt, dass die Baufolie 16 als Dampfbremse und/oder Dampfsperre ausgebildet sein kann, wobei die als Dampfbremse ausgebildete Baufolie 16 diffusionsdicht, diffusionshemmend, wasserdampfbremsend, wasserdampfsperrend und/oder luftdicht, vorzugsweise wasserdicht, ausgebildet ist.

Die in Fig. 11 gezeigte Baufolie 16 ist wasserdicht, diffusionsoffen und/oder atmungsaktiv ausgebildet.

Außerdem weist die in Fig. 11 gezeigte Baufolie 16 einen S_{d}-Wert von kleiner oder gleich 0,5 m auf. Insbesondere beträgt der S_{d}-Wert 0,03 +/- 0,02 m.

Die in Fig. 12 gezeigte Vliesschicht 19 ist eine nassstrahlverfestigte Vliesschicht 19. In der in Fig. 13 dargestellten Ausführungsform ist als Vliesschicht 19 eine durch Vernadelung verfestigte und/oder eine thermisch verfestigte Vliesschicht 19 vorgesehen. Die Vliesschicht 19 kann auch als Stapelfaservlies ausgebildet sein.

In weiteren Ausführungsformen kann die Vliesschicht 19 ein polyolefinisches Vlies, ein Polyestervlies, ein Naturfaservlies, ein Polypropylen-Spinnvlies, ein Polyamid-Vlies, ein Polylactide-Vlies (PLA-Vlies) aufweisen und/oder als engmaschiges Gewirke hergestellt sein.

Die in Fig. 14 und 15 dargestellte Trägerschicht 21 kann in weiteren Ausführungsformen als Vliesschicht 19 ausgebildet sein. Letztlich kann die Trägerschicht 21 auch die Funktionen der Vliesschicht 19 übernehmen.

Bei dem in Fig. 14 und 15 dargestellten Ausführungsformen ist vorgesehen, dass der Feuchtesensor 1 - in den dargestellten Ausführungsformen die Elektrode 18 des Feuchtesensors 1 - im unmittelbaren Kontakt mit der Trägerschicht 21 ist. Demzufolge ist - wie zuvor erwähnt - die Elektrode 18 in bzw. an der Trägerschicht 21 angeordnet.

Darüber hinaus zeigen die Schichtaufbauten 17 der in den Fig. 12 bis 15 dargestellten Ausführungsformen, dass die den Feuchtesensor 1 und/oder die Elektrode 18 des Feuchtesensors 1 aufweisende Trägerschicht 21 und/oder Vliesschicht 19 unterseitig, der Witterungsseite bzw. der Oberseite 24 abgewandt, der Baufolie 16 bzw. des mehrlagigen Schichtaufbaus 17 angeordnet ist/sind. Demgemäß ist oberseitig, der Witterungsseite zugewandt, auf der den Feuchtesensor 1 bzw. die Elektrode 18 des Feuchtesensor 1 aufweisenden Trägerschicht 21 und/oder Vliesschicht 19 wenigstens eine weitere Schicht 22 angeordnet. Die weitere Schicht 22 kann als Vliesschicht 19 und/oder Funktionsschicht 20 ausgebildet sein.

Demzufolge ist die Vliesschicht 19 bzw. die Trägerschicht 21 nicht an der Oberseite 24 der Baufolie 16 angeordnet. Die Vliesschicht 19 bzw. die Trägerschicht 21 kann insbesondere nicht wasserdicht bzw. wasserdurchlässig ausgebildet sein.

Es ist jedoch anzumerken, dass die den Feuchtesensor 1 und/oder die Elektrode 18 des Feuchtesensors 1 aufweisende Trägerschicht 21 und/oder Vliesschicht 19 auch oberseitig, der Witterungsseite bzw. der Oberseite 24 zugewandt, der Baufolie 16 bzw. des mehrlagigen Schichtaufbaus 17 angeordnet sein kann. Bei dieser Ausrichtung ist die weitere Schicht 22, die vorzugsweise als Vliesschicht 19 und/oder Funktionsschicht 20 ausgebildet sein kann, entsprechend unterseitig, der Witterungsseite bzw. der Oberseite 24 abgewandt, der Baufolie 16 bzw. des mehrlagigen Schichtaufbaus 17 angeordnet.

Nicht dargestellt ist, dass die Vliesschicht 19 und/oder die Trägerschicht 21 einen in Wasser und/oder in Feuchtigkeit löslichen und/oder einen mit Wasser und/oder Feuchtigkeit mischbaren Elektrolytbildner aufweist. Als Elektrolytbildner kann ein Zitronensäurepulver und/oder ein Oxalessigsäure, Mulansäure, Glutarsäure, Chinasäure und/oder ein Vitamin C aufweisendes Pulver vorgesehen sein. Insbesondere ist das Pulver vollflächig oder teilflächig über der Oberfläche der Vliesschicht 19 und/oder der Trägerschicht 21 aufgebracht und/oder in die Oberfläche eingebracht. Bei Kontakt mit Feuchtigkeit kann sich das Pulver bzw. der Elektrolytbildner auflösen und insbesondere die elektrische Leitfähigkeit der Feuchtigkeit und/oder der mit dem Feuchtesensor 1 und/oder der Elektrode 18 in Kontakt kommenden Feuchtigkeit erhöhen. Dies kann zur späteren elektrochemischen Reaktion mit der Elektrode 18 verwendet werden.

Fig. 1 zeigt, dass der Feuchtesensor 1 eine Sensorelektronik 9 aufweist, wobei die Sensorelektronik 9 eine Sendeeinrichtung 12 aufweist, die zur drahtlosen Übertragung von Informationen ausgebildet ist. Die Sendeeinrichtung 12 kann ein akustisches Signal und/oder ein Funksignal aussenden, das zur Informationsübertragung ausgebildet ist.

Fig. 16 zeigt ein System 23 mit einer Baufolie 16 und einer Empfangseinrichtung 14, wobei Informationen der Sendeeinrichtung 12 berührungslos an die Empfangseinrichtung 14 übertragbar sind. Die Empfangseinrichtung 14 kann derart ausgebildet sein, dass der Feuchtesensor 1 lokalisierbar und/oder identifizierbar ist.

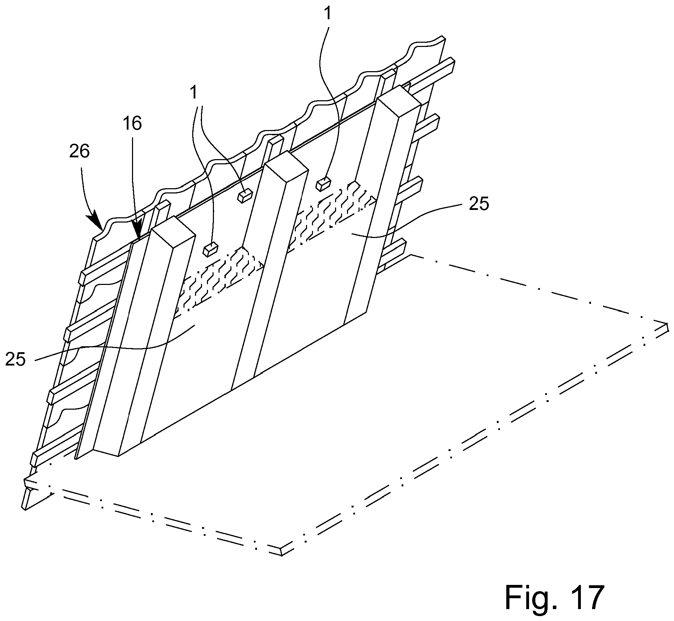

Ferner zeigt Fig. 17, dass in einer die Baufolie 16 aufweisenden Unterbedachung einer Bedachung eine Mehrzahl an Feuchtesensoren 1 vorgesehen ist. Die Feuchtesensoren 1 können an der der Oberseite 24 abgewandten Seite der Baufolie 16 angeordnet sein und insbesondere - wie in dem in Fig. 17 dargestellten Ausführungsbeispiel - dem Inneren des Gebäudes und/oder einer Dämmung bzw. einer Dämmplatte 25 zugewandt sein.

Angeordnet an die Oberseite 24 kann eine Hartbedachung 26 vorgesehen sein. Das System 23 zeichnet sich demzufolge dadurch aus, dass der Feuchtesensor 1, der die Feuchtigkeit in der Bedachung gemäß dem in Fig. 17 dargestellten Ausführungsbeispiel detektiert, auch lokalisiert werden kann, so dass ziel- und zweckgerichtet diejenige undichte Stelle der Bedachung zur Behebung des Lecks repariert werden kann.

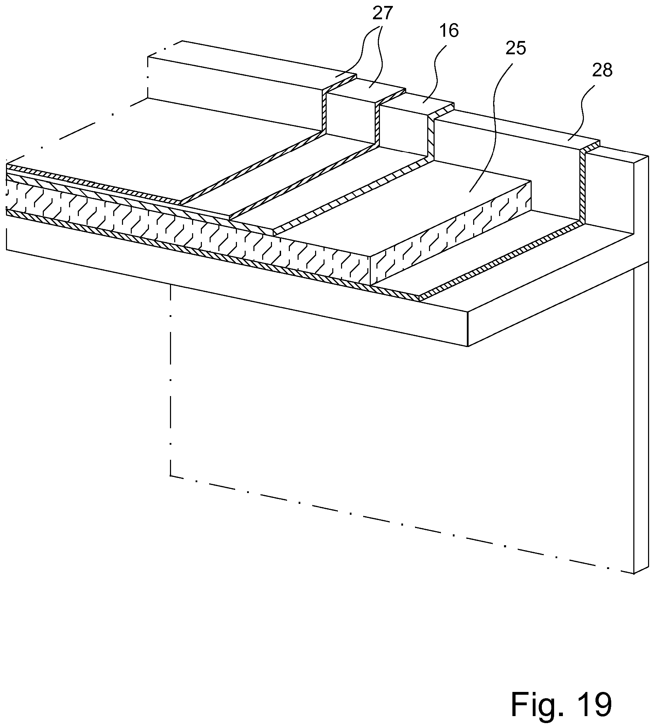

Fig. 19 zeigt einen Aufbau zur Abdeckung eines Flachdachs. Hierbei wird eine Baufolie 16 eingesetzt. In dem dargestellten Ausführungsbeispiel ist die den Feuchtesensor 1 aufweisende Baufolie 16 unterhalb, der Witterungsseite abgewandt, von wenigstens einer Abdichtungsbahn 27 angeordnet. Zwischen einer Dampfbremse 28 und der Baufolie 16 ist eine Dämmplatte 25 angeordnet. Nicht dargestellt ist, dass die Dampfbremse 28 auch als Baufolie 16 mit einem integrierten Feuchtesensor 1 ausgebildet sein kann.

Wie bereits erwähnt, kann bei der Verwendung auf dem Flachdach der Feuchtesensor 1 und/oder die den Feuchtesensor 1 aufweisende Vliesschicht 19 und/oder Trägerschicht 21 auch oberhalb, der Witterungsseite bzw. der Oberseite 24 zugewandt, der Baufolie 16 angeordnet sein. Dementsprechend ist die Funktionsschicht 20 dem Dachbereich zugewandt bzw. der Witterungsseite abgewandt. Bei dieser Ausrichtung wird eine Undichtigkeit in der Abdichtungsbahn 27 durch den unmittelbar darunter angeordneten Feuchtesensor 1 besonders schnell erfasst.

Nicht dargestellt ist eine Anordnung, bei der auf die separate Dampfbremse 28 verzichtet werden kann, sofern die Baufolie 16 selbst dampfbremsend bzw. als Dampfbremse ausgebildet ist. In diesem Fall wird die Baufolie 16 zwischen der Dämmplatte 25 einerseits und dem Dachbereich andererseits angeordnet. Dadurch übernimmt die Baufolie 16 neben der Leckagedetektion mittels des Feuchtesensors 1 auch die Funktion einer Dampfbremse, wobei eine Leckage an der Dämmplatte 25 direkt erfassbar ist. Auch kann eine Leckage an der als Dampfbremse ausgebildeten Baufolie 16 selbst erfasst werden, wobei hierzu der Feuchtesensor 1 vorzugsweise dem Dachbereich zugewandt an der Baufolie 16 angeordnet ist.

### Bezugszeichenliste:

- 1: Feuchtesensor
- 2: erste Elektrode
- 3: erstes Material
- 4: zweite Elektrode
- 5: zweites Material
- 6: erster Oberflächenbereich
- 7: zweiter Oberflächenbereich
- 8: Beschichtung
- 9: Sensorelektronik
- 10: Energiespeichereinrichtung
- 11: Spannungserhöhungseinrichtung
- 12: Sendeeinrichtung
- 13: RFID-Transponder
- 14: Empfangseinrichtung
- 15: System
- 16: Baufolie
- 17: Schichtaufbau
- 18: Elektrode
- 19: Vliesschicht
- 20: Funktionsschicht
- 21: Trägerschicht
- 22: weitere Schicht
- 23: System
- 24: Oberseite
- 25: Dämmplatte
- 26: Hartbedachung
- 27: Abdichtungsbahn
- 28: Dampfbremse

## Patentansprüche

1. Baufolie (16), insbesondere Dachbahn, Dachfolie, Flachdachbahn, Fassadenbahn und/oder Dampfbremse und/oder Unterdachbahn, insbesondere Unterdeck- und/oder Unterspannbahn, mit einem ein- oder mehrlagigen Schichtaufbau (17),
wobei
der Baufolie (16) wenigstens ein Feuchtesensor (1) zur Detektion von Feuchtigkeit zugeordnet ist,
**dadurch gekennzeichnet,**
**dass** der Feuchtesensor (1) als aktiver Aufnehmer ausgebildet ist und
**dass** der Feuchtesensor (1) wenigstens eine Elektrode (18) aufweist und die Elektrode (18) im unmittelbaren Kontakt mit einer Vliesschicht (19) ist.

2. Baufolie nach Anspruch 1, **dadurch gekennzeichnet, dass** die Elektrode (18) an und/oder in der Vliesschicht (19) angeordnet ist.

3. Baufolie nach Anspruch 1 oder 2, **dadurch gekennzeichnet, dass** der Schichtaufbau (17) wenigstens eine Funktionsschicht (20) und/oder wenigstens eine Trägerschicht (21) aufweist.

4. Baufolie nach Anspruch 3, **dadurch gekennzeichnet, dass** die Funktionsschicht (20) diffusionsoffen, insbesondere wasserdampfdurchlässig, und/oder wasserdicht und/oder atmungsaktiv ausgebildet ist und/oder dass die Funktionsschicht (20) und/oder die, insbesondere als Flachdachbahn ausgebildete, Baufolie (16) diffusionsdicht, diffusionshemmend, wasserdampfundurchlässig und/oder wasserdicht ausgebildet ist.

5. Baufolie nach einem der vorhergehenden Ansprüche, **dadurch gekennzeichnet, dass** die Vliesschicht (19) als thermisch verfestigte und/oder nadel- und/oder nassstrahlverfestigte Vliesschicht (19) ausgebildet ist und/oder dass die Vliesschicht (19) ein polyolefinisches Vlies, ein Polyestervlies, ein Naturfaservlies, ein Polypropylen-Spinnvlies, ein Polyamid-Vlies, ein Polylactide-Vlies (PLA-Vlies) aufweist und/oder als Stapelfaservlies und/oder als engmaschiges Gewirke hergestellt ist.

6. Baufolie nach einem der vorhergehenden Ansprüche 3 bis 5, **dadurch gekennzeichnet, dass** die Trägerschicht (21) als Vliesschicht (19) ausgebildet ist.

7. Baufolie nach einem der vorhergehenden Ansprüche, **dadurch gekennzeichnet, dass** der Feuchtesensor (1) im unmittelbaren Kontakt mit der Trägerschicht (21) ist, insbesondere an und/oder in der Trägerschicht (21) angeordnet ist.

8. Baufolie nach einem der vorhergehenden Ansprüche, **dadurch gekennzeichnet, dass** - zumindest im Einbauzustand der Baufolie (16) - der Feuchtesensor (1) oberseitig, der Witterungsseite zugewandt, oder unterseitig, der Witterungsseite abgewandt, an der Baufolie (16) angeordnet ist.

9. Baufolie nach einem der vorhergehenden Ansprüche 3 bis 8, **dadurch gekennzeichnet, dass** die den Feuchtesensor (1) aufweisende Trägerschicht (21) und/oder die Vliesschicht (19) unterseitig oder oberseitig, der Witterungsseite abgewandt oder zugewandt, der Baufolie (16) angeordnet ist und/oder dass oberseitig, der Witterungsseite zugewandt, auf der den Feuchtesensor (1) aufweisenden Trägerschicht (21) und/oder Vliesschicht (19) wenigstens eine weitere Schicht (22) angeordnet ist.

10. Baufolie nach einem der vorhergehenden Ansprüche, **dadurch gekennzeichnet, dass** die Vliesschicht (19) einen in Wasser löslichen und/oder einen mit Wasser mischbaren Elektrolytbildner aufweist.

11. Baufolie nach einem der vorhergehenden Ansprüche, **dadurch gekennzeichnet, dass** der Feuchtesensor (1) eine Sensorelektronik (9) aufweist, wobei die Sensorelektronik (9) eine Sendeeinrichtung (12) aufweist, die zur drahtlosen Übertragung von Informationen ausgebildet ist.

12. System (23) mit einer Baufolie (16) nach einem der vorhergehenden Ansprüche und einer Empfangseinrichtung (14), wobei Informationen der Sendeeinrichtung (12) berührungslos an die Empfangseinrichtung (14) übertragbar sind, vorzugsweise wodurch die Empfangseinrichtung (14) derart ausgebildet ist, dass der Feuchtesensor (1) lokalisierbar und/oder identifizierbar ist.

## Claims

1. Construction foil (16), in particular roofing membrane, roof foil, flat roofing membrane, facade membrane and/or vapor barrier and/or sub-roofing membrane, in particular underlayment and/or sarking membrane, with a single-layer or multilayer layer structure (17), wherein at least one moisture sensor (1) for detecting moisture is assigned to the construction foil (16),
**characterized in that**
the moisture sensor (1) is designed as an active pick-up, and
**in that** the moisture sensor (1) has at least one electrode (18) and the electrode (18) is in direct contact with a nonwoven layer (19).

2. Construction foil according to claim 1, **characterized in that** the electrode (18) is arranged on and/or in the nonwoven layer (19).

3. Construction foil according to claim 1 or 2, **characterized in that** the layer structure (17) comprises at least one functional layer (20) and/or at least one carrier layer (21).

4. Construction foil according to claim 3, **characterized in that** the functional layer (20) is designed to be open to diffusion, in particular permeable to water vapor, and/or waterproof and/or breathable and/or **in that** the functional layer (20) and/or the construction foil (16), in particular designed as a flat roof sheet, is designed to be diffusion-tight, diffusion-inhibiting, impermeable to water vapor and/or waterproof.

5. Construction foil according to one of the preceding claims, **characterized in that** the nonwoven layer (19) is formed as a thermally bonded and/or needle-jet and/or wet-jet bonded nonwoven layer (19) and/or **in that** the nonwoven layer (19) comprises a polyolefinic nonwoven, a polyester nonwoven, a natural fiber nonwoven, a polypropylene spunbonded nonwoven, a polyamide nonwoven, a polylactide nonwoven (PLA nonwoven) and/or is produced as a staple fiber nonwoven and/or as a close-meshed knitted fabric.

6. Construction foil according to one of the preceding claims 3 to 5, **characterized in that** the carrier layer (21) is formed as a nonwoven layer (19).

7. Construction foil according to one of the preceding claims, **characterized in that** the moisture sensor (1) is in direct contact with the carrier layer (21), in particular is arranged on and/or in the carrier layer (21).

8. Construction foil according to one of the preceding claims, **characterized in that** - at least in the installed state of the construction foil (16) - the moisture sensor (1) is arranged on the construction foil (16) on the upper side, facing the weather side, or on the under side, facing away from the weather side.

9. Construction foil according to one of the preceding claims 3 to 8, **characterized in that** the carrier layer (21) having the moisture sensor (1) and/or the nonwoven layer (19) is arranged on the underside or upper side, facing away from or towards the weather side, of the building film (16) and/or **in that** at least one further layer (22) is arranged on the upper side, facing towards the weather side, on the carrier layer (21) and/or nonwoven layer (19) having the moisture sensor (1).

10. Construction foil according to one of the preceding claims, **characterized in that** the nonwoven layer (19) comprises a water-soluble and/or a water-miscible electrolyte former.

11. Construction foil according to one of the preceding claims, **characterized in that** the moisture sensor (1) has sensor electronics (9), the sensor electronics (9) having a transmitting device (12) which is designed for wireless transmission of information.

12. System (23) with a construction foil (16) according to one of the preceding claims and a receiving device (14), wherein information from the transmitting device (12) can be transmitted to the receiving device (14) without contact, preferably whereby the receiving device (14) is designed in such a way that the moisture sensor (1) can be located and/or identified.

## Revendications

1. Feuille de construction (16), en particulier feuille de toiture, feuille de toit, feuille de toit plat, feuille de façade et/ou pare-vapeur et/ou feuille de sous-toiture, en particulier feuille de sous-couverture et/ou feuille de sous-tension, avec une structure de couches (17) monocouche au multicouche, dans laquelle au moins un capteur d'humidité (1) est associé à la feuille de construction (16) pour détecter l'humidité, **caractérisé en ce que**
le capteur d'humidité (1) est conçu comme un capteur actif et
enc e que le capteur d'humidité (1) présente au moins une électrode (18) et l'électrode (18) est en contact direct avec une couche de non-tissé (19).

2. Feuille de construction selon la revendication 1, **caractérisée en ce que** l'électrode (18) est disposée sur et/ou dans la couche de non-tissé (19).

3. Feuille de construction selon la revendication 1 ou 2, **caractérisée en ce que** la structure de couches (17) présente au moins une couche fonctionnelle (20) et/ou au moins une couche de support (21).

4. Feuille de construction selon la revendication 3, **caractérisée en ce que** la couche fonctionnelle (20) est réalisée de manière à être ouverte à la diffusion, en particulier perméable à la vapeur d'eau, et/ou étanche à l'eau et/ou respirante, et/ou **en ce que** la couche fonctionnelle (20) et/ou la feuille de construction (16), réalisée en particulier sous forme de feuille de toit plat, est réalisée de manière à être étanche à la diffusion, à empêcher la diffusion, à être imperméable à la vapeur d'eau et/ou à être étanche à l'eau.

5. Feuille de construction selon l'une des revendications précédentes, **caractérisée en ce que** la couche de non-tissé (19) est réalisée sous forme de couche de non-tissé (19) consolidée thermiquement et/ou consolidée par aiguilletage et/ou par jet humide et/ou **en ce que** la couche de non-tissé (19) présente un non-tissé poly-oléfinique, un non-tissé de polyester, un non-tissé de fibres naturelles, un non-tissé de polypropylène filé-lié, un non-tissé de polyamide, un non-tissé de polylactide (non-tissé PLA) et/ou est fabriquée sous forme de non-tissé de fibres discontinues et/ou de tricot à mailles serrées.

6. Feuille de construction selon l'une des revendications précédentes 3 à 5, **caractérisée en ce que** la couche de support (21) est conçue comme une couche non tissé (19).

7. Feuille de construction selon l'une des revendications précédentes, **caractérisée en ce que** le capteur d'humidité (1) est en contact direct avec la couche de support (21), en particulier est disposé sur et/ou dans la couche de support (21).

8. Feuille de construction selon l'une des revendications précédentes, **caractérisée en ce que** - au moins à l'état monté de la feuille de construction (16) - le capteur d'humidité (1) est disposé sur la feuille de construction (16) sur la face supérieure, tournée vers le côté exposé aux intempéries, ou sur la face inférieure, opposée au côté exposé aux intempéries.

9. Feuille de construction selon l'une des revendications précédentes 3 à 8, **caractérisée en ce que** la couche de support (21) présentant le capteur d'humidité (1) et/ou la couche de non-tissé (19) est disposée sur la face inférieure ou supérieure, opposée ou tournée vers le côté exposé aux intempéries, de la feuille de construction (16) et/ou **en ce qu'**au moins une autre couche (22) est disposée sur la face supérieure, tournée vers le côté exposé aux intempéries, sur la couche de support (21) et/ou la couche de non-tissé (19) présentant le capteur d'humidité (1).

10. Feuille de construction selon l'une des revendications précédentes, **caractérisée en ce que** la couche non tissé (19) présente un agent électrolytique soluble dans l'eau et/ou miscible à l'eau.

11. Feuille de construction selon l'une des revendications précédentes, **caractérisée en ce que** le capteur d'humidité (1) présente une électronique de capteur (9), l'électronique de capteur (9) présentant un dispositif d'émission (12) qui est conçu pour la transmission sans fil d'informations.

12. Système (23) avec une feuille de construction (16) selon l'une des revendications précédentes et un dispositif de réception (14), dans lequel des informations du dispositif d'émission (12) peuvent être transmises sans contact au dispositif de réception (14), de préférence par lequel le dispositif de réception (14) est conçu de telle sorte que le capteur d'humidité (1) peut être localisé et/ou identifié.
